# EUROPEAN PATENT APPLICATION

(11) **EP 1 063 817 A2**
(43) Date of publication of application: **27.12.2000**
(21) Application number: 00305147.1
(22) Date of filing: 19.06.2000
(51) Int. Cl.: H04L 12/56, H04N 7/24

(54) **Transmission method and electrical equipment**

(30) Priority: 18.06.1999 JP 17316699
(71) Applicant: SONY CORPORATION, Tokyo 141 (JP)
(72) Inventor: Takada, Yasuhiro, I.P.Dept, Sony Corporation, Tokyo 141 (JP)
(74) Representative: Turner, James Arthur

(57) **Abstract**

A problem that occurs when the receiving side does not know the size of the data that are to be transmitted is avoided in a network such as of the IEEE 1394 system. When the data are to be transmitted among equipment connected to a predetermined network, a connection is established for transmitting data between a first equipment and a second equipment connected to the network, the data related to the size of data to be transmitted from the first equipment is transmitted from the first equipment to the second equipment and, after the data size is transmitted, the data are transmitted from the first equipment to the second equipment.

## Description

The present invention relates to a transmission method for transmitting data among equipment connected through bus lines of, for example, the IEEE 1394 system, electronic equipment to which the transmission method is adapted to execute the transmission, and a provider medium to which the transmission method is adapted to provide a program.

There has been developed AV equipment which is capable of exchanging data through a network using a serial data bus of the IEEE 1394 system. In transmitting the data through this bus, there are provided an isochronous transfer mode that is used for transmitting dynamic data and audio data of relatively large capacity in real time and an asynchronous transfer mode used for reliably transmitting still picture, text data and control command, and a dedicated band is used for the transmission depending upon the mode.

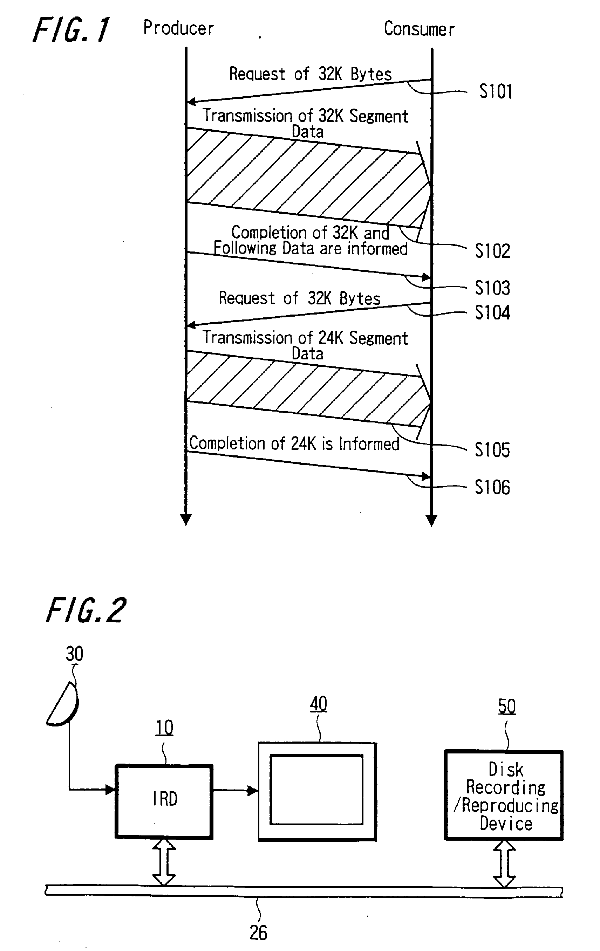

Fig. 1 illustrates a transmission processing in the asynchronous transfer mode. Here, equipment which transmits data onto a bus line in the asynchronous transfer mode is referred to as a producer, and equipment which receives data transmitted through the bus line is referred to as a consumer.

When the data are to be transmitted in the asynchronous transfer mode, the data to be transmitted on the consumer side are stored as a segment for every predetermined amount of data. The consumer, then, transmits data to the producer to request the transmission of data of a predetermined amount (32 kbytes in this case)(step S101). Upon receipt of this request, the producer transmits the data of one segment to the consumer at a timing at which the data can be transmitted in the asynchronous transfer mode (step S102). Then, the producer informs the consumer of the completion of the transmission of data of one segment (32 kbytes) and of the fact that the data still follows the data of the above one segment (step S103). Upon receipt of this data, the consumer sends the data to the producer to request the transmission of the data of another 32 kbytes(step S104). Upon receipt of this request, the producer transmits the data of the next segment to the consumer at a timing at which the data can be transmitted in the asynchronous transfer mode (step S105). In the transmission at this step S105, the data are transmitted in an amount of 24 kbytes only, and it is so regarded that the transmission of the provided data is completed. When the transmission of the provided data is completed as a result of the transmission of data of this segment, the producer informs the consumer of the completion of the transmission of data of 24 kbytes (step S106).

When informed of the step S106, the consumer learns, for the first time, that the total amount of data transmitted is 56 kbytes (32 k + 24 k).

With the asynchronous transfer mode as described above, the receiving side learns the size of the transmitted data, for the first time, when the transmission is completed. This makes it difficult for the receiving side to execute the processing that meets the size of data. That is, it would be difficult to maintain a suitable buffer region for receiving the data size in advance. Besides, there is a limit on the size of data storage space that can be provided on the receiving side; i.e., the size error cannot be detected prior to the transmission of data when the region is not capable of receiving the transmitted data having a large size.

Various respective aspects and features of the invention are defined in the appended claims.

Embodiments of the present invention can avoid a problem that occurs when the receiving side does not know the size of the data that are transmitted over the network such as of the IEEE 1394 system.

Embodiments of the present invention can provide a transmission method of transmitting data among equipment connected to a predetermined network, comprising:
a step of establishing a connection for transmitting the data between a first equipment and a second equipment connected to the network;
a step of transmitting data from the first equipment to the second equipment, the data being related to the size of data to be transmitted from the first equipment; and
a step for transmitting data from the first equipment to the second equipment after the step of transmitting the data size.

The invention is further concerned with an electronic equipment connected to a predetermined network, comprising:
input/output means for exchanging data relative to other equipment upon establishing the connection to the other equipment connected to the network; and
control means for detecting the size of data transmitted to the other equipment.

Embodiments of the invention can provide a provider medium for providing a program for controlling the communication among equipment connected to a predetermined network, the program executing:
a processing for establishing a connection between a plug of a first equipment and a plug of a second equipment in executing the communication between the first equipment and the second equipment connected to the network; and
a processing for transmitting data from the first equipment to the second equipment, the data being related to the size of data to be transmitted from the first equipment.

According to the present invention, equipment (electronic equipment) on the receiving side connected to the network is allowed to confirm the size of data to be transmitted prior to starting the transmission of data.

The invention will now be described by way of example with reference to the accompanying drawings, throughout which like parts are referred to by like references, and in which:
Fig. 1 is a diagram illustrating the state of data in an asynchronous transfer mode;
Fig. 2 is a block diagram illustrating the whole constitution of the system according to an embodiment of the present invention;
Fig. 3 is a block diagram illustrating the internal constitution of the IRD and of the disk recording/reproducing device according to an embodiment of the present invention;
Fig. 4 is a diagram illustrating the structure of a cycle for transmitting data using a bus of the IEEE 1394 system;
Fig. 5 is a diagram illustrating the structure of address space of a CRS architecture;
Fig. 6 is a view illustrating the positions, names and functions of a principal CRS;
Fig. 7 is a diagram illustrating a general ROM format;
Fig. 8 is a view illustrating a bus info block, a root directory and a unit directly;
Fig. 9 is a diagram illustrating the constitution of a PCR;
Fig. 10 is a diagram illustrating the constitutions of oMPR, oPCR, iMPR and iPCR;
Fig. 11 is a diagram illustrating a relationship among a plug, a plug control register and a transmission channel;
Fig. 12 is a diagram illustrating the structure of data based on a hierarchical structure of a descriptor;
Fig. 13 is a diagram illustrating a data format of the desriptor;
Fig. 14 is a diagram illustrating a generation ID of Fig. 13;
Fig. 15 is a diagram illustrating a list ID of Fig. 13;
Fig. 16 is a diagram illustrating a stacked model of an AV/C command;
Fig. 17 is a diagram illustrating a relationship between the command of FCP and the response thereto;
Fig. 18 is a diagram illustrating, in further detail, the relationship between the command and the response of Fig. 17;
Fig. 19 is a diagram illustrating the data structure of the AV/C command;
Fig. 20 is a diagram concretely illustrating the AV/C command;
Fig. 21 is a diagram concretely illustrating the command and response of the AV/C command;
Fig. 22 is a diagram illustrating the forms of equipment according to embodiments of the invention;
Fig. 23 is a diagram illustrating the state of transmission according to an embodiment of the present invention;
Fig. 24 is a diagram illustrating an operating mode info block;
Fig. 25 is a diagram illustrating an operating mode;
Fig. 26 is a diagram illustrating an example of recording data onto a disk;
Fig. 27 is a diagram illustrating another state of transmission according to an embodiment of the present invention;
Fig. 28 is a diagram illustrating a state of transmission according to another embodiment of the present invention;
Fig. 29 is a diagram illustrating a state of transmission according to a further embodiment of the present invention;
Fig. 30 is a diagram illustrating a packet for setting an asynchronous connection;
Fig. 31 is a diagram illustrating an allocate command and a response;
Fig. 32 is a diagram illustrating an allocate attach command and a response;
Fig. 33 is diagram illustrating an attach command and a response;
Fig. 34 is a diagram illustrating an object number select control command;
Fig. 35 is a diagram illustrating a record object control command;
Fig. 36 is a diagram illustrating a connect information control command;
Fig. 37 is a diagram illustrating an example of data (example 1) specific to the contents type;
Fig. 38 is a diagram illustrating an example of data (example 2) specific to the contents type;
Fig. 39 is a diagram illustrating a detach command and a response;
Fig. 40 is a diagram illustrating a detach release command and a response; and
Fig. 41 is a diagram illustrating a release command and a response.

An embodiment of the present invention will now be described with reference to Figs. 2 to 41.

The constitution of a network system to which an embodiment of the invention is applied will be described will be described with reference to Fig. 2. The network system includes a plurality of equipment connected through a cable 26 that constitutes a serial data bus of the IEEE 1394 system. Here, as shown in Fig. 2, an IRD (integrated receiver decoder) 10 and a disk recording/reproducing device 50 both having bus connection terminals of the IEEE 1394 system are connected to the cable 26. The IRD 10 is a digital satellite broadcast receiver which receives signals input through an antenna 30, and demodulates broadcast signals of a received channel. The channels that can be received may include a channel for television broadcast by video signals and voice signals, as well as a channel for radio broadcast by voice signals (audio signals) and a channel for broadcasting data.

The IRD 10 is connected to a television monitor 40 through an analog cable, and the broadcast received by the IRD 10 can be viewed on the monitor 40. Here, the monitor 40 may be connected to the cable 26, and the video data may be transmitted to the monitor 40 through the cable 26.

The disk recording/reproducing device 50 is the one for recording and reproducing audio signals by using, as a recording medium, a magnetic-optic disk or an optical disk called mini-disk (MD).

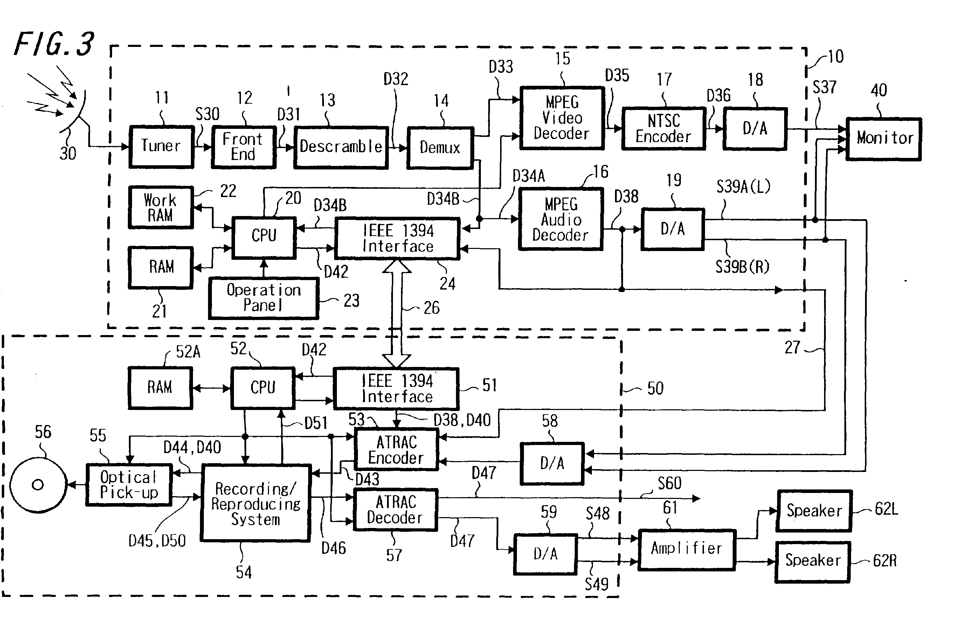

Fig. 3 is a diagram illustrating in detail the constitution for receiving and recording broadcast signals of a digital satellite broadcast system. Broadcast electromagnetic waves from a satellite (not shown) are received by an antenna 30 and are sent to a tuner 11 which is a program selection means provided in the IRD 10 as a program receiving device. The circuitry in the CPU 20 operates being controlled by the CPU 20, and reception signals S30 from a transponder selected by the tuner 11 are sent to a front end unit 12.

The front end unit 12 demodulates the reception signals S30, corrects error for the reception data, and sends them as a reception data stream D31 to a descramble circuit 13.

Based on an encryption key data of a contracted channel stored in an IC card (not shown) inserted in the body of the IRD 10, the descramble circuit 13 takes out multiplexed data D32 of the contracted channel out of the reception data stream D31 and sends them to the demultiplexer 14.

The demultiplexer 14 rearranges the multiplexed data D32 for each of the channels, takes out only a channel designated by a user, sends a video stream D33 of a packet of image portion to an MPEG video decoder 15, and sends an overlapped stream D34A of a packet of voice portion to an MPEG audio decoder 16.

The MPEG video decoder 15 decodes the video stream D33 to reconstruct the video data D35 of before being compression-encoded, and sends them to an NTSC encoder 17. The NTSC encoder 17 converts the video data D35 into brightness signals and color difference signals of the NTSC system, and sends them, as NTSC data D36, to a digital/analog converter circuit 18. The digital/analog converter circuit 18 converts the NTSC data D36 into analog signals S37 and sends them, as image, to the monitor 40.

The MPEG audio decoder 16 decodes the audio stream D34A, reconstructs PCM (pulse code modulation) audio data D38 of before being compression-encoded, and sends them to a digital/analog converter circuit 19. The PCM audio data D38 are further fed to an interface 24 and are sent onto the bus line 26. The PCM audio data D38 can be further directly transmitted to the disk recording/reproducing device 50 through a cable 27 which is not a bus line.

The digital/analog converter circuit 19 converts the PCM audio data D38 into analog signals to form L-ch audio signals S39A and R-ch audio signals S39B, and produces them as voice through a speaker (not shown) of the monitor 40, and further sends them to an analog/digital converter circuit 58 in the disk recording/reproducing device 50.

When a music channel only has been designated out of the contracted channels, the demultiplexer 14 sends the audio stream D34A out of the multiplexed data D32 to the MPEG audio decoder 16, and sends a voice addition data stream D34B which is the addition data of packet of voice addition data to the CPU 20 through an IEEE 1394 interface 24.

The CPU 20 forms title data D40 which is the program addition data out of the packet of the voice addition data stream D34B expressed by characters and numerical figures based on ID (identification) numbers attached to them.

Here, the CPU 20 which is a record control means forms record control data D41 which is a control signal for controlling the recording operation such as start and stop of recording based upon a record instruction input by the user through an operation button (not shown) on an operation panel 23, and sends the record control data D41 and the title data D40, as control data D42, back to the IEEE 1394 interface 26.

The IEEE 1394 interface 26 which is the data transmission/reception means sends the control data D42 from the CPU 20 to a CPU 52 through the IEEE 1394 interface 51 of the disk recording/reproducing means 50 which is the data recording/reproducing means, and sends the PCM audio data D38 from the IEEE 1394 cable 26 to an ATRAC encoder 53 through the IEEE 1394 interface 51.

Being controlled by the CPU 52, the ATRAC encoder 53 highly efficiently encodes the PCM audio data D38 by the ATRAC (adaptive transform acoustic coding) system, and sends them, as PCM audio data D43, to the recording/reproducing system 54.

The CPU 52 in the disk recording/reproducing apparatus 50 controls the recording operations of a recording/reproducing system 54 and of a light pick-up 55 based on the record control data D41 among the control data D42, adds an error correction code and executes a predetermined modulation for the PCM audio data D43 through the recording/reproducing system 54, and stores them as record data D44 in a designated region of the magnetic-optic disk 56.

Further, based on the record control data D41, the CPU 52 of the disk recording/reproducing device 50 controls the recording operations of the recording/reproducing system 54 and of the light pick-up 55, stores the data expressed by predetermined characters (half-em characters) and numerical figures among the title data D40, as character/numeral code title data D401A, in a predetermined area of the magnetic-optic disk 56, and stores the data expressed by predetermined characters (em characters), as character/code title data D40B, in a predetermined area.

Thus, the IRD10 controls, using the CPU 20, the recording operation of the disk recording/reproducing device 50 to store the PCM audio data D38 in a predetermined region of the magnetic-optic disk 56, and stores the title data D40 corresponding to the PCM audio data D38 in a predetermined area(TOC area) of the magnetic-optic disk 56.

At the time of reproduction, the disk recording/reproducing device 50 sends the data D45 reproduced by the light pick-up 55 to the recording/reproducing system 54. The recording/reproducing system 54 corrects error and executes predetermined demodulation for the reproduced data D45, and sends them as reproduced data D46 to the ATRAC decoder 57.

The ATRAC decoder 57 decodes the reproduced data D46 by the ATRAC system, and sends them as digital reproduced data D47 to an external unit through an optical digital cable 60, or converts them into analog L-ch audio signals S48 and R-ch audio signals S49 through the digital/analog converter circuit 59, and produces them as voice from speakers 61L and 61R connected to an amplifier unit 61.

Further, the disk recording/reproducing device 50 reads, through the light pick-up 55, the title data D50 corresponding to the data D45 reproduced from the TOC1 area and/or the TOC4 area of the magnetic-optic disk 56, and sends them to the recording/reproducing system 54. The recording/reproducing system 54 corrects error and effects predetermined demodulation for the title data D50, and sends them, as title data D51, to the CPU 52.

The CPU 52 stores the title data D51 in a RAM (random access memory) 52A, and sends the title data D51 to a RAM 21 through IEEE 1394 interface 51, IEEE 1394 cable 26, IEEE 1394 interface 24 and CPU 20, so that the title data D51 is stored in the RAM 21 which is a storage means.

In this state, when an instruction data for displaying picture data corresponding to the title data D51 on the monitor 40, is input through the operation panel 46, the CPU 20 which is the display control means reads the title data D52 from the RAM 21 and sends it to the MPEG video decoder 15. The MPEG video decoder 15 executes a predetermined graphic processing for the title data D52, sends the obtained picture data to the monitor 40 through the NTSC encoder 17 and the digital/analog converter circuit to display the GUI (graphic user interface) screen on the monitor 40 which is the display means.

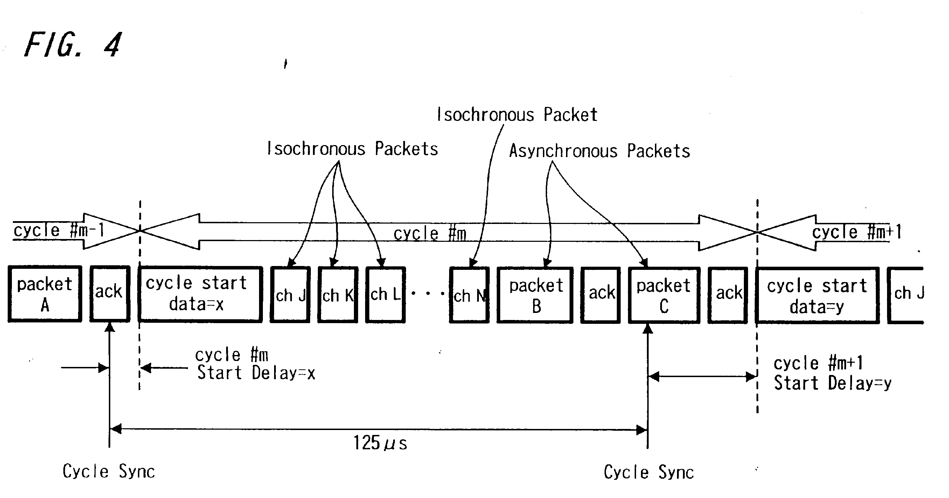

Fig. 4 is a diagram illustrating a cyclic structure of data transmission of equipment connected by IEEE 1394. In the IEEE 1394, the data are divided into packets and are transmitted in a time-dividing manner with a cycle of a length of 125 µS as a reference. The cycle is formed by a cycle start signal supplied from a node (any equipment connected to the bus) having a cycle master function. The isochronous packet maintains a band (time unit which is called band) necessary for the transmission from the head of all cycles. Therefore, the isochronous transmission guarantees the transmission of data within a predetermined period of time. In case a transmission error has occurred, however, there is no protection means, and the data are lost. In the asynchronous transmission in which the node that has secured the bus sends an asynchronous packet as a result of arbitration during the period in which the cycles are not used for the isochronous transmission, the transmission is reliably guaranteed by using acknowledge and retry, but the transmission timing does not become constant.

In order for the predetermined node to execute the isochronous transmission, the node must be corresponded to the isochronous function. Further, at least one of the nodes corresponding to the isochronous function must have a cycle master function. Besides, at least one of the nodes connected to the IEEE 1394 serial bus must have a function of isochronous resource manager.

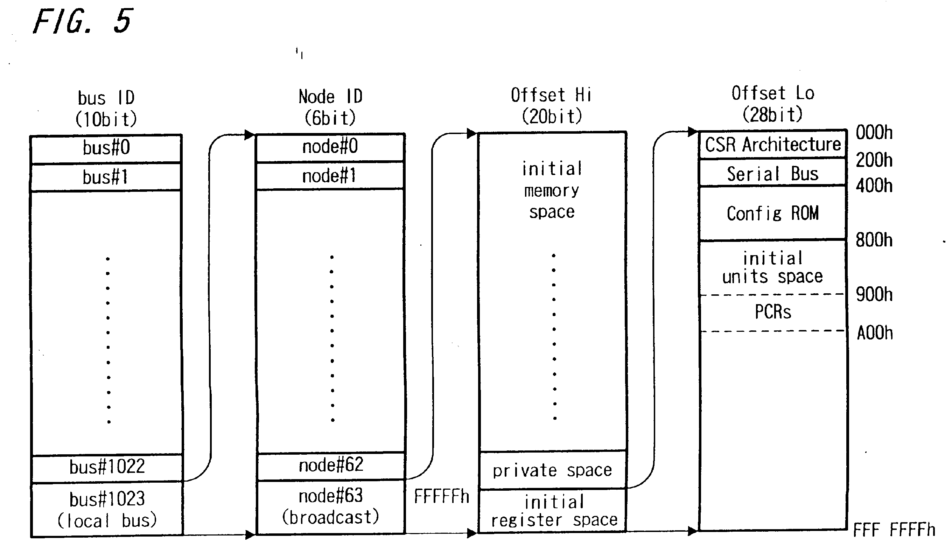

The IEEE 1394 complies with a CSR (control and status register) architecture having address space of 64 bits specified under ISO/IEC 13213. Fig. 5 is a diagram illustrating the structure of address space of CSR architecture. The most significant 16 mites are node IDs representing the nodes on the IEEE 1394s, and the remaining 48 bits are used for specifying address space given to the nodes. The most significant 16 bits can be further divided into 10 bits of the bus ID and 6 bits of the physical ID (node ID in a narrow sense). The values with which all bits assume 1 are used for particular purposes and, hence, 1023 buses and 63 nodes can be designated.

Among the address spaces specified by the least significant 48 bits, the space specified by the most significant 20 bits is divided into initial register space used by a register specific to CSR of 2048 bytes and used by a register specific to IEEE 1394, a private space and an initial memory space. When the space specified by the most significant 20 bits is the initial register space, the space specified by the least significant 28 bits is used as a configuration ROM (configuration read-only memory), as an initial unit space used for a particular node or as a plug control register (PCRs).

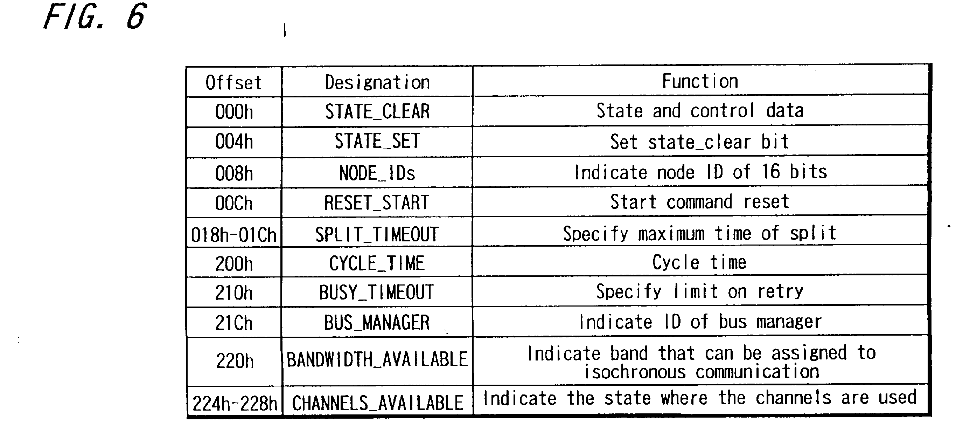

Fig. 6 is a diagram illustrating the offset addresses, names and functions of principal CSRs. In Fig. 6, the offset represents an offset address from an address FFFFF0000000h (the numerals taking a final h are of the hexadecimal notation) from where the initial resister space starts. The bandwidth available register having an offset 220h shows a band that can be assigned to the isochronous communication and where only a value of the node operating as an isochronous resource manager is effective. That is, the CSR of Fig. 5 is possessed by every node. As for the bandwidth available register, however, the isochronous resource manager only is effective. In other words, the bandwidth available resister is substantially possessed by the isochronous resource manager only. When the band is not assigned to the isochronous communication, a maximum value is preserved in the bandwidth available register, and the value decreases every time when the band is assigned.

The channel available registers of offsets 224h to 228h have bits that are corresponding to the channel numbers of from 0 to 63. When the bit is 0, it means that the channel has been assigned already. The channels available register of the node operating as the isochronous resource manager only is effective.

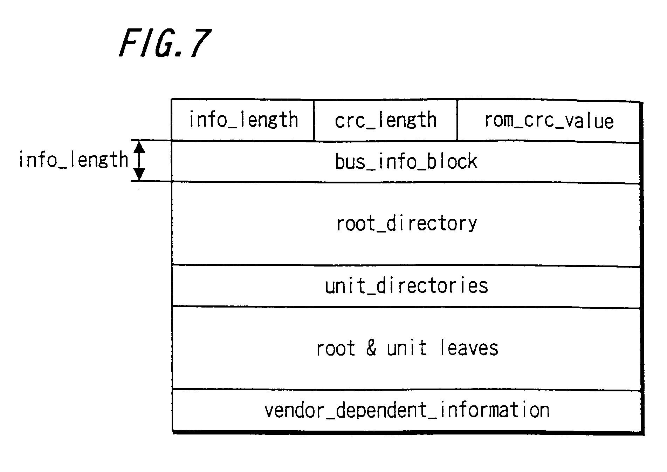

Reverting to Fig. 5, a configuration ROM based on general ROM (read-only memory) format is arranged in the addresses 200h to 400h in the initial register space. Fig. 7 is a diagram illustrating the general ROM format. A node which is a unit of access on the IEEE 1394 can have plural units that independently operate commonly using an address space in the node. Unit directories represent the version and position of a software for the unit. The positions of a bus info block and a root directory are secured, but the positions of other blocks are designated by offset addresses.

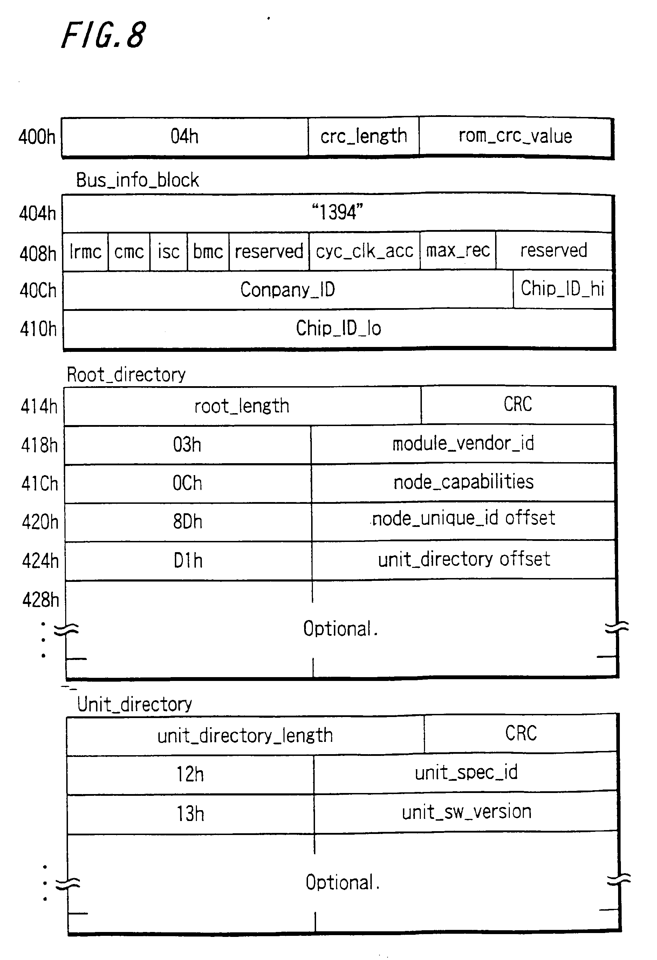

Fig. 8 is a diagram illustrating in detail the bus info block, root directory and unit directory. A company ID in the bus info block stores an ID number that represents the manufacturer of equipment. A chip ID stores an ID which is specific to equipment and is unique in the world without overlapping those of other equipment. In compliance with the IEC 61883 standard, further, 00h is written in the first octet, Aoh is written in the second octet and 2Dh is written in the third octet of a unit spec ID of the unit directory of equipment that meets IEC 61883: Further, 01h is written in the first octet and 1 is written in the LSB (least significant bit) of the third octet of the unit switch version.

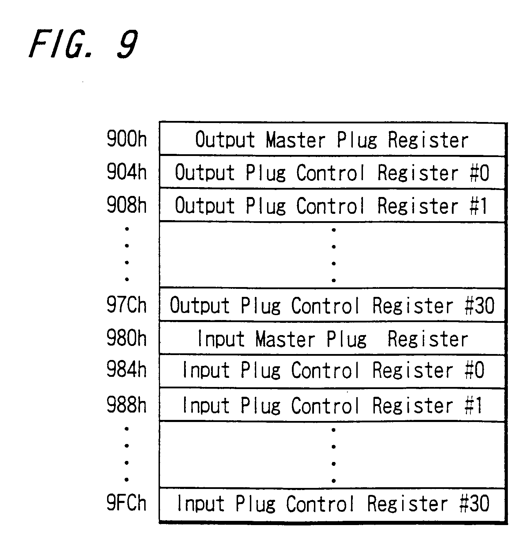

In order to control the input and output of equipment through the interface, the node possesses a PCR (plug control register) specified under IEC 61883 in the addresses 900h to 9FFh in the initial unit space of Fig. 5. That is, the concept of plug is embodied in order to form a signal path which theoretically resembles the analog interface. Fig. 9 is a diagram illustrating the constitution of the PCR which has an oPCR (output plug control register) expressing an output plug and an iPCR (input plug control register) expressing an input plug. The PCR further has a register oMPR (output master plug register) that shows the data of an output plug or an input plug specific to equipment, and an iMPR (input master plug register). Each equipment never has oMPR and iMPR in a plural number, but is allowed to have oPCR and iPCR corresponding to the individual plugs depending upon the ability of equipment. The PCRs shown in Fig. 9 each have oPCRs and iPCRs in a number of 31. The flow of the isochronous data is controlled by operating the registers corresponding to these plugs.

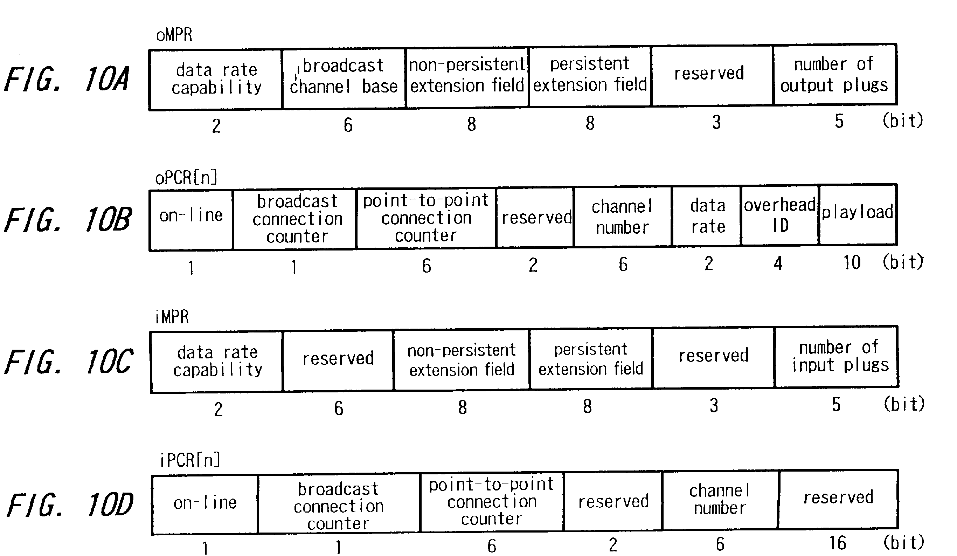

Figs. 10A to 10D illustrate the constitutions of oMPR, oPCR, iMPR and iPCR. Fig. 10A illustrates the constitution of the oMPR, Fig. 10B illustrates the constitution of the oPCR, Fig. 10C illustrates the constitution of the iMPR, and Fig. 10D illustrates the constitution of the iPCR. A code representing a maximum transmission rate of isochronous data that can be transmitted or received by equipment is stored in the two-bit data rate capabilities of the oMPR and iMPR on the MSB side. A broadcast channel base of the oMPR specifies the number of the channel that is used for producing the broadcast.

The number of the output plugs possessed by equipment, i.e., a value indicating the number of oPCRs is stored in the 5-bit number of output plugs of the oMPR of the LSB side. The number of the input plugs possessed by equipment, i.e., a value indicating the number of iPCRs is stored in the 5-bit number of input plugs of the iMPR of the LSB side. A non-persistent extension field and a persistent extension field are regions defined for the expansion in the future.

The on-line of MSB of oPCR and iPCR represents the state where the plug is used. A value 1 indicates that the plug is on-line and a value 0 indicates that the plug is off-line. A value of the broadcast connection counter of oPCR and iPCR indicates that there is a broadcast connection (1) or there is no broadcast connection (0). A value of a point-to-point connection counter having a 6-bit width of the oPCR and iPCR represents the number of point-to-point connections possessed by the plug.

A value possessed by a channel number having 6-bit width of oPCR and iPCR represents the number of the isochronous channel to which the plug is connected. A value of the data rate having a 2-bit width of the oPCR represents the real transmission rate of packets of isochronous data output from the plug. A code stored in an overhead ID having a 4-bit width of oPCR represents a band width of over of isochronous communication. A value of payload having a 10-bit width of oPCR represents a maximum value of data included in the isochronous packet that can be handled by the plug.

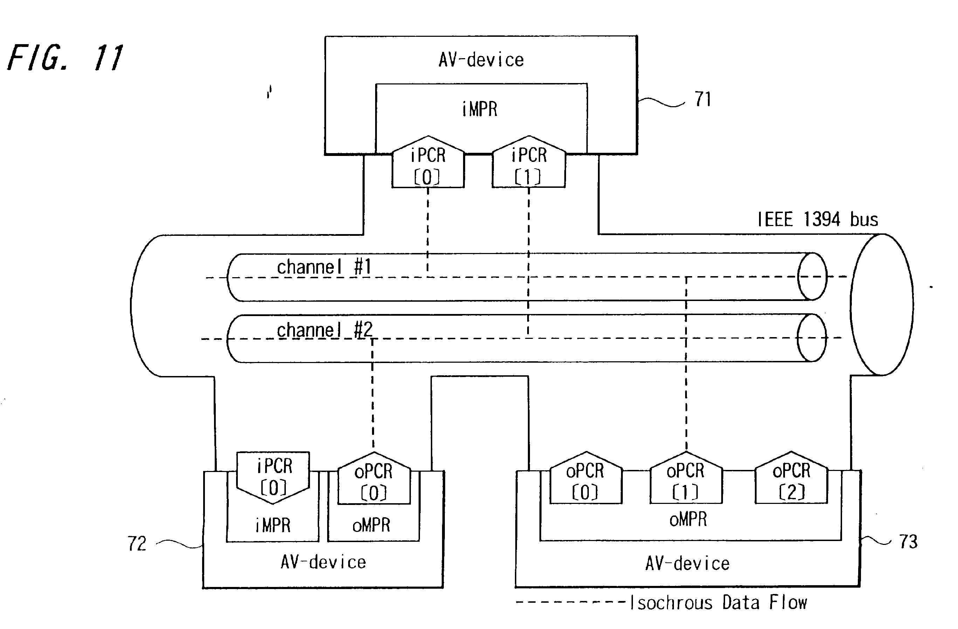

Fig. 11 is a diagram illustrating a relationship among the plug, plug control register and isochronous channel. AV devices 71 to 73 are connected through the IEEE 1394 serial bus. The isochronous data are transmitted to a channel #1 of the IEEE 1394 serial bus, the isochronous data being designated for its channel by oCR [1] out of oPCR[0] to oPCR[2] of which the transmission rate and the number of oPCRs are specified by oMPR of the AV device 73. The AV device 71 reads the isochronous data transmitted to the channel #1 of the IEEE 1394 serial bus, from iPCR[0] and iPCR[1] of which the transmission rate and the number of iPCRs are specified by iMPR of the AV device 71. Similarly, the AV device 72 sends the isochronous data to a channel #2 designated by oPCR[0], and the AV device 71 reads the isochronous data from the channel #2 designated by iPCR[1].

Thus, the data are transferred among the equipment connected through the IEEE 1394 serial bus. In the system of this embodiment, the equipment are controlled and the their states are judged by utilizing an AV/C command set specified as a command for controlling the equipment connected through the IEEE 1394 serial bus. Next, the AV/C command set will be described.

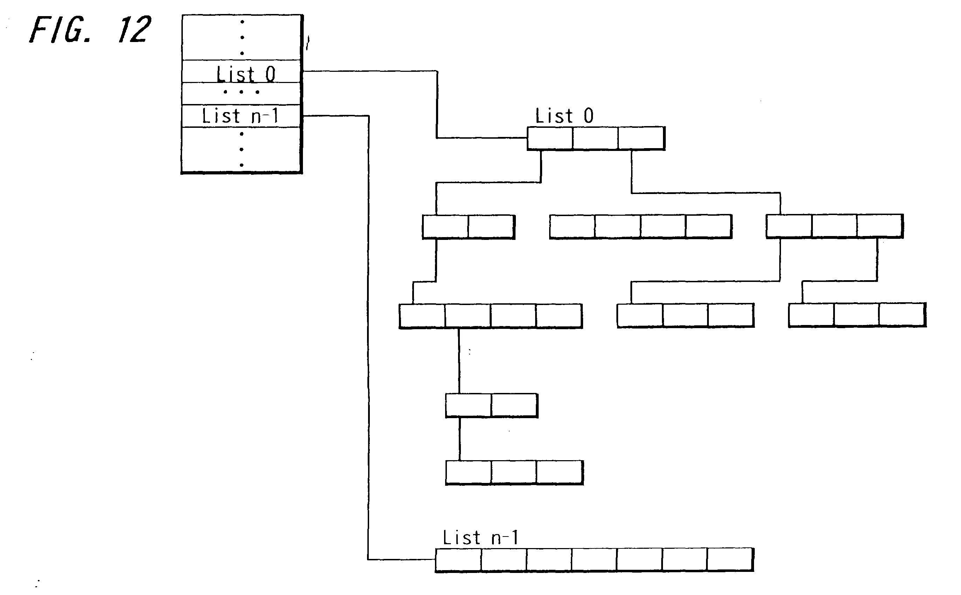

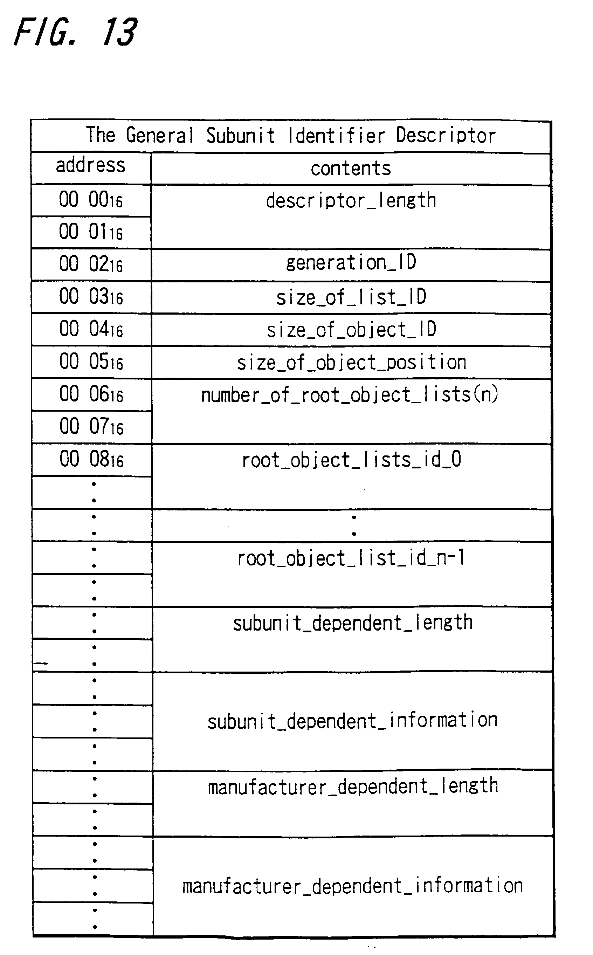

First, the data structure of the subunit identifier descriptor used for storing various data in the system of the embodiment will be described with reference to Figs. 12 to 15. Fig. 12 illustrates the data structure of the subunit identifier descriptor. Referring to Fig. 12, the data structure is formed of a list of hierarchical structure of the subunit identifier descriptor. The list shows the channels that can be received in the case of a tuner and shows the tunes recorded therein in the case of a disk. The list of the uppermost layer of the hierarchical structure is called root list, and the list 0 becomes a root for the next significant list. Similarly, lists 2 to (n-1) become the root lists. The root lists exist in the number of objects. Here, the objects stand for channels in a digital broadcast when the AV equipment is, for example, a tuner. Further the lists of a hierarchy shares common data.

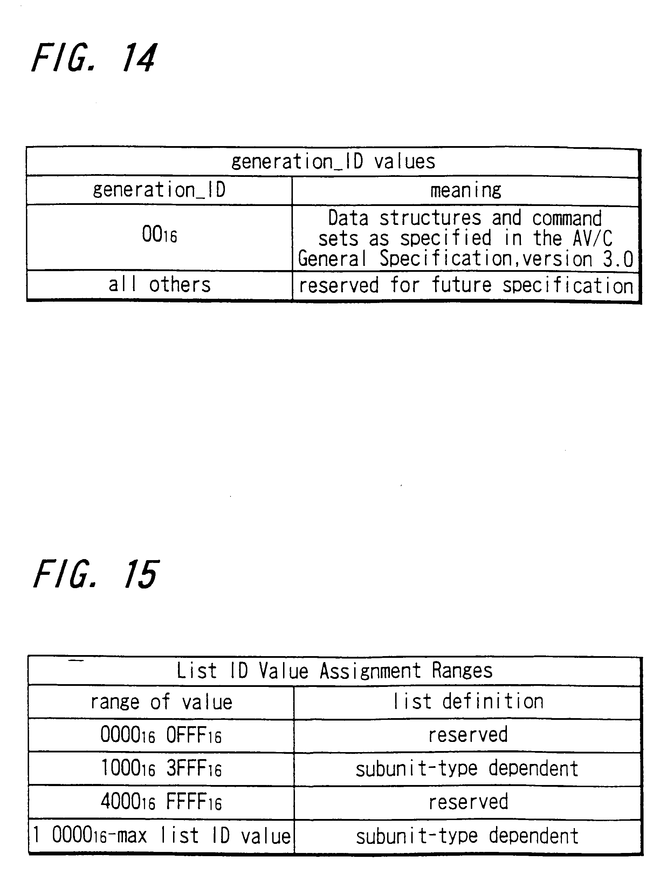

Fig. 13 shows the format of the general subunit identifier descriptor used in the existing system. The subunit identifier descriptor 41 describes, in the contents, the attribute data related to the functions. The value of the descriptor length field itself is not included. The generation ID represents a version of the AV/C command set and its value is now "00h" (h represents the hexadecimal notation) as shown in Fig. 14. Here, "00h" stands for that the data structure and the command are version 3.0 of AV/C general specification. Referring to Fig. 14, further, values except "00h" are all reserved for the future specification.

The size of list ID represents the number of bytes of list ID. The size of object ID represents the number of bytes of object ID. The size of object position represents the position (number of bytes) in the list that is referred to during the control operation. The number of root object lists represents the number of root object lists. The root object list ID represents an ID for identifying the uppermost root object list of the independent hierarchies.

The subunit dependent length represents the number of bytes of a succeeding subunit dependent information field. The subunit dependent information is a field showing data specific to the function. The manufacturer dependent length represents the number of bytes of the succeeding manufacturer dependent information field. The manufacturer dependent information is a field showing the specification data of a vender (manufacturer). When the manufacturer dependent information is not contained in the descriptor, then, this field does not exist.

Fig. 15 shows the range of assigning the list ID shown in Fig. 13. Referring to Fig. 15, "0000h to OFFFn" and "4000h to FFFFh" are reserved as a range for assignment for the future specification. "1000h to 3FFFh" and "10000h to max list ID value" are provided for identifying attribute data of the function type.

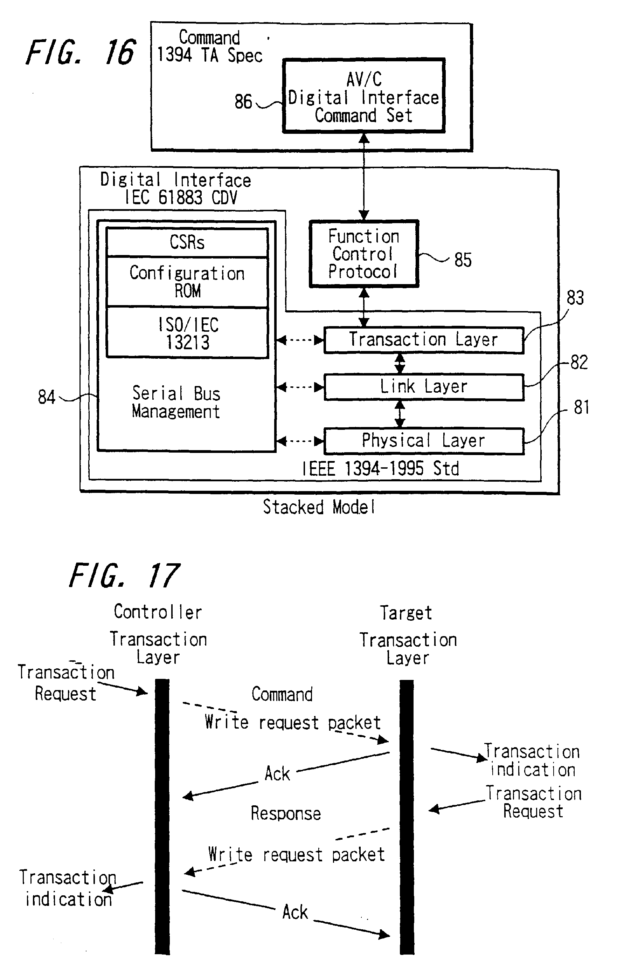

Next, the AV/C command set used in the system of this embodiment will be described with reference to Figs. 16 to 21. Fig. 16 shows a stacked model of AV/C command set. Referring to Fig. 16, a physical layer 81, a link layer 82, a transaction layer 83 and a serial bus management 84 comply with the IEEE 1394. The FCP (function control protocol) 85 complies with the IEC 61883. The AV/C command set 86 complies with the AV/D digital interface command set general specification.

Fig. 17 is a diagram illustrating a command of FCP 85 and a response thereto of Fig. 16. The FCP is a protocol for controlling the AV equipment on the IEEE 1394. Referring to Fig. 17, the side for executing the control is a controller and the side to be controlled is a target. The transmission or response of command of FCP is executed between the nodes using a write transaction of asynchronous communication of IEEE 1394. The target that has received the data returns the acknowledgement to the controller for making sure the reception.

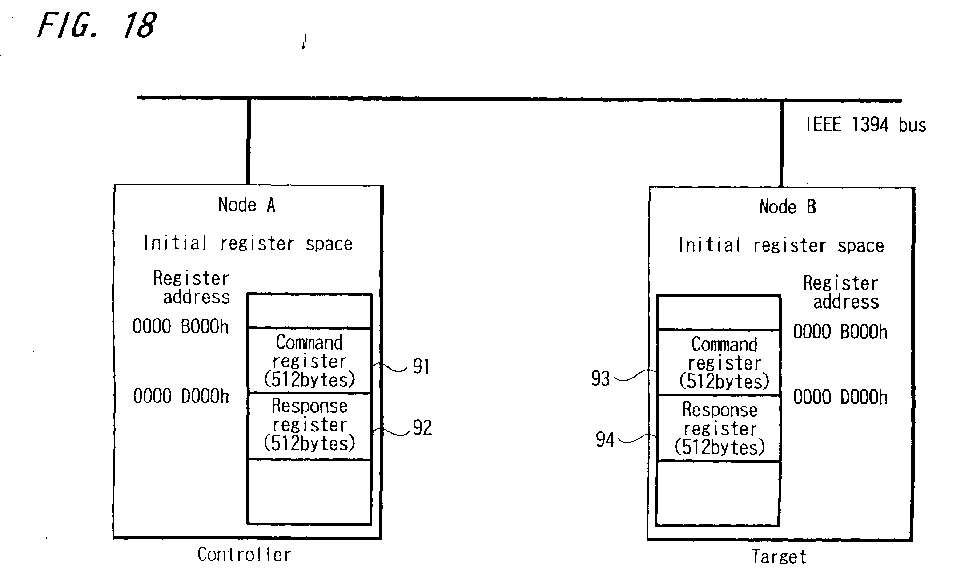

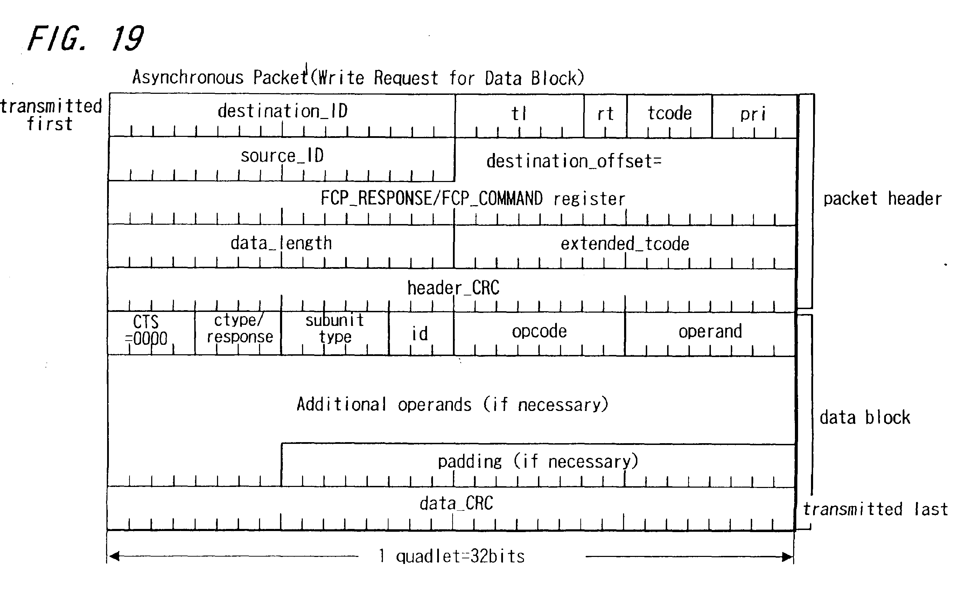

Fig. 18 is a diagram for illustrating, in further detail, the relationship between the command and the response of FCP shown in Fig. 17. The node A and the node B are connected together through the IEEE 1394 bus. The node A is the controller and the node B is the target. Both the node A and the node B have command registers and response registers of 512 bytes. Referring to Fig. 18, the controller writes a command message onto the command register 93 of the target to transmit an instruction. Conversely, further, the target writes a response message onto the response register 92 of the controller to transmit an instruction. The control data are exchanged for the above two messages. The kind of the command set sent by FCP is listed in CTS in the data field shown in Fig. 19 that will be described below.

Fig. 19 illustrates the data structure of a packet transmitted by the asynchronous transfer mode of AV/C command. The AV/C command set is the one for controlling the AV equipment and has CTS (command set ID) - "0000". The AV/C command frame and the response frame are exchanged between the nodes using the FCP. The response to the command is executed within 100 ms so that no burden is exerted on the bus and on the AV equipment. Referring to Fig. 19, the data of asynchronous packet are constituted by (= 1 quadlet) in the horizontal direction. In the drawing, the upper stage represents a header portion of packet, and the lower stage represents a data block. The destination_ID represents the destination.

The CTS represents the ID of command set. In the AV/C command set, CTS = "0000". The field of ctype/response shows the classification of functions of the command when the packet is a command, and shows the result of processing the command when the packet is a response. The commands can be roughly defined in four kinds, i.e., (1) a command (CONTROL) for controlling the functions from the external side, (2) a command (STATUS) for inquiring the state from the external side, (3) a command (GENERAL INQUIRY (presence of support of opcode) and SPECIFIC INQUIRY (presence of support of opcode and operands)) for inquiring the presence of support of a control command from the external side, and (4) a command (NOTIFY) for so requesting that a change in the state be informed to the external side.

The response is returned depending upon the kind of the command. The response to the CONTROL command includes NOT IMPLEMENTED, ACCEPTED, REJECTED AND INTERIM. The response to the STATUS command includes NOT IMPLEMENTED, REJECTED, IN TRANSITION and STABLE. The response to the GENERAL INQUIRY and SPECIFIC INQUIRY commands include IMPLEMENTED and NOT IMPLEMENTED. The response to the NOTIFY command include NOT IMPLEMENTED, REJECTED, INTERIM and CHANGED.

The subunit type is provided for specifying the function in the equipment, and to which the tape recorder/player, tuner, etc. are assigned. To judge the presence of plural subunits of the same kind, the addressing is effected using a subunit ID as an identification number. The opcode represents a command and the operand represents a parameter of the command. Additional operands are fields that are added as required. The padding is a field that is added as required. The data CRC (cyclic redundancy check) is used for checking error during the transmission of data.

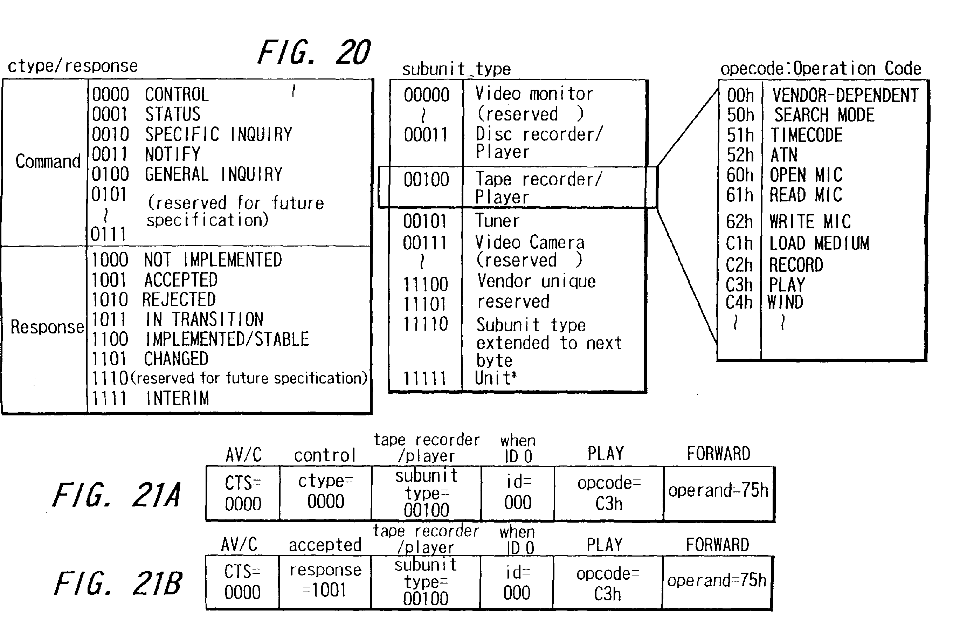

Fig. 20 illustrates a concrete example of the AV/C command. The left side in Fig. 20 is a concrete example of ctype/response. The upper stage represents the command and the lower stage represents the response. CONTROL is assigned to "0000", STATUS is assigned to "0001", SPECIFIC INQUIRY is assigned to "0010", NOTIFY is assigned to "0011", and GENERAL INQUIRY is assigned to "0100". "0101 to 0111" are reserved for the future specification. NOT IMPLEMENTED is assigned to "1000", ACCEPTED is assigned to "1001", REJECTED is assigned to "1010", IN TRANSITION is assigned to "1011", IMPLEMENTED/STABLE is assigned to "1100", CHANGED is assigned to "1101", and INTERIM is assigned to "1111". "1110" is reserved for the future specification.

The center of Fig. 20 is a concrete example of the subunit type. Video Monitor is assigned to "00000", Disk recorder/Player is assigned to "00011", Tape recorder/Player is assigned to "00100", Tuner is assigned to "00101", Video Camera is assigned to "00111", Vendor unique is assigned to "11100", and Subunit type extended to next byte is assigned to "11110". The unit is assigned to "11111", which, however, is used when it is to be sent to the equipment like on/off of the power source.

The right side of Fig. 20 is a concrete example of the opcode. The table of opcode exists for each of the subunit types. Illustrated here is the opcode of when the subunit type is Tape recorder/Player. The operand is defined for each of the opcodes. Here, VENDOR-DEPENDENT is assigned to "00h", SEARCH MODE is assigned to "50h", TIMECODE is assigned to "51h", ATN is assigned to "52h", OPEN MIC is assigned to "60h", READ MIC is assigned to "61h", WRITE MIC is assigned to "62h", LOAD MEDIUM is assigned to "C1h", RECORD is assigned to "C2h", PLAY is assigned to "C3h", and WIND is assigned to "C4h".

Figs. 21A and 21B illustrate concrete examples of the AV/C command and the response. When, for example, the reproduction is to be instructed to the reproducing equipment as the target (consumer), the controller sends a command shown in Fig. 21A to the target. The command uses AV/C command set and, hence, CTS = "0000". The ctype uses a command (CONTROL) for controlling the equipment from the outer side and, hence, ctype = "0000" (see Fig. 20). The subunit type is Tape recorder/Player and, hence, subunit type = "00100" (see Fig. 20). The id represents the case of IDO and, hence, id = 000. The opcode is "C3h" meaning the reproduction (see Fig. 20). The operand is "75h" meaning FORWARD. When the data are reproduced, the target returns the response shown in Fig. 21B to the controller. Here, accepted enters into the response and, hence, response = "1001" (see Fig. 20). The others except the response are the same as those of Fig. 21A and are not described here.

Next, described below is a processing for recording the data in a recording medium (disk) using a disk recording/reproducing device upon receiving a digital satellite broadcast with the system constitution shown in Figs. 2 and 3. Here, when the channel with which the audio data are obtained is received by IRD10 and the received audio data are recorded into a disk 56 using the disk recording/reproducing device 50, the data accompanying the audio data are received by the IRD10 and are stored, and the stored data are transmitted from the IRD10 to the disk recording/reproducing device 50 via the IEEE 1394 serial bus so as to be recorded into the disk 56. The data accompanying the audio data will be still picture data obtained from a jacket picture which is, for example, a title picture, and text data such as words, name of tune and explanation. It is now presumed that the static picture data of the jacket picture are transmitted by utilizing the AV/C command. The static picture data are compressed by, for example, the JPEG (joint photographic experts group) system and are transmitted by the asynchronous transfer mode.

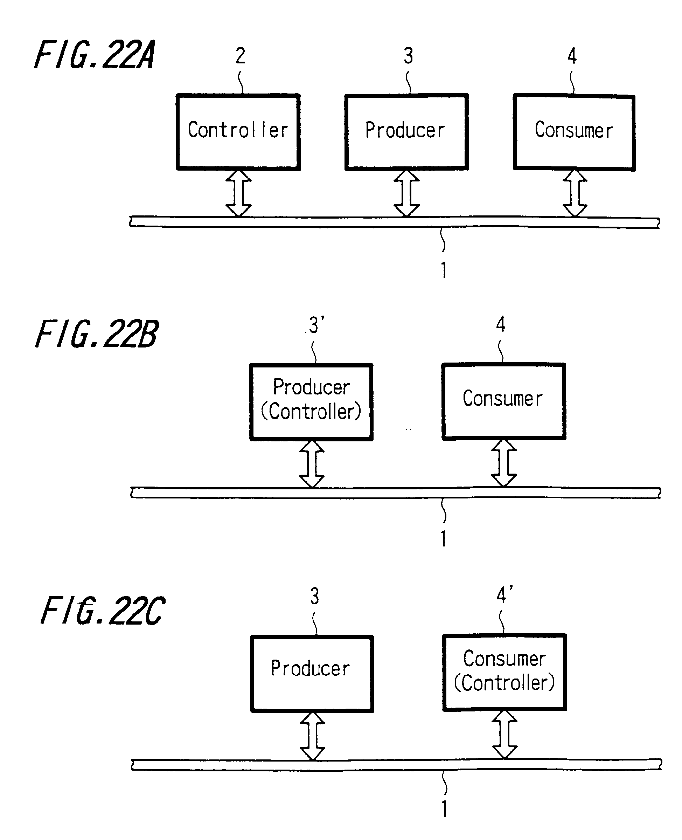

Prior to describing the state of transmission, described below with reference to Figs. 22A to 22C are what functions are exhibited on the AV/C command by the IRD10 which is the source of transmitting the data and by the disk recording/reproducing device 50 which is the destination that receives the data when the transmission is executed by using the AV/C command set. When the data are to be controlled by the AV/C command, an equipment connected to the IEEE 1394 serial bus 1 serves as a controller 2 as shown in, for example, Fig. 22A, and the controller 2 controls the transmission of data from the equipment 3 which is the source of transmitting the data and controls the reception of data by the equipment 4 which is the destination that receives the data. Here, the equipment 3 which is the source of transmitting the data is called producer, and the equipment 4 which is the destination that receives data is called consumer. In the example shown in Fig. 22A, therefore, the IRD 10 serves as a producer 3 and the disk recording/reproducing device 50 serves as a consumer 4, and the transmission between the two equipment 3 and 4 is controlled by an equipment 2 which is another controller connected to the IEEE 1394 serial bus 1.

In the example of Fig. 22A, there exists another equipment working as a controller. When only two equipment are connected to the bus 1, either one equipment also works as a controller. That is, as shown in Fig. 22B, the producer 3' which is IRD10 is provided with a control function to work as a controller, and the data are transmitted from the producer 3' to the consumer 4 by the controller function in the producer 3'. Or, as shown in Fig. 22C, the consumer 4' which is the disk recording/reproducing device 50 is provided with a control function to work as a controller, and the data are transmitted from the producer 3 to the consumer 4' by the controller function in the consumer 4'.

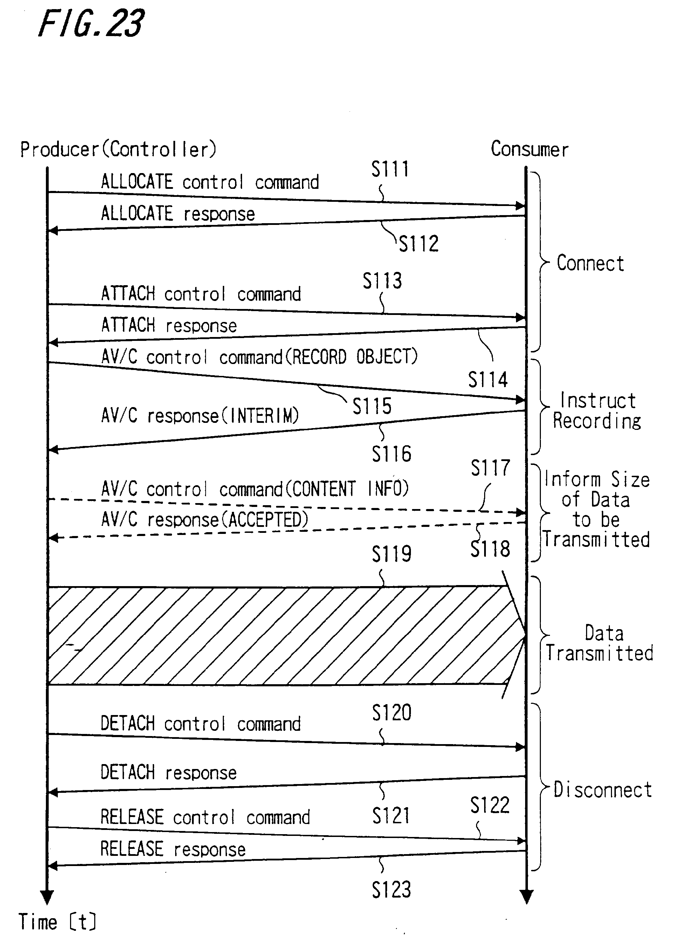

In an example that will be described below as shown in Fig. 22B, the IRD10 exhibits the functions of both the producer and the controller, and the data are transmitted to the consumer which is the disk recording/reproducing device 50. Fig. 23 is a diagram illustrating the state of transmission in this case, and wherein the left side represents the producer and the controller (here, the equipment is simply called producer) as IRD10, and the right side represents the disk recording/reproducing device 50.

When the still picture data are to be transmitted from the producer, a processing is executed for establishing a connection for asynchronous transmission between the producer and the consumer. That is, the ALLOCATE control command is sent from the producer to the consumer by utilizing a packet of AV/C command explained with reference to Fig. 19 (step S111). The command is the one for designating the address of a plug used for the transmission. The packet of the response for the command is sent from the consumer to the producer (step S112). Thereafter, the packet of ATTACH control command is sent from the producer to the consumer (step S113). This command is the one indicating the completion of the setting of plug. The packet of response to the command is sent from the consumer to the producer (step S114). Through the processing up to this point, the connection is established between the producer and the consumer, and a transmission line for the asynchronous transmission is maintained for transmitting the static picture data.

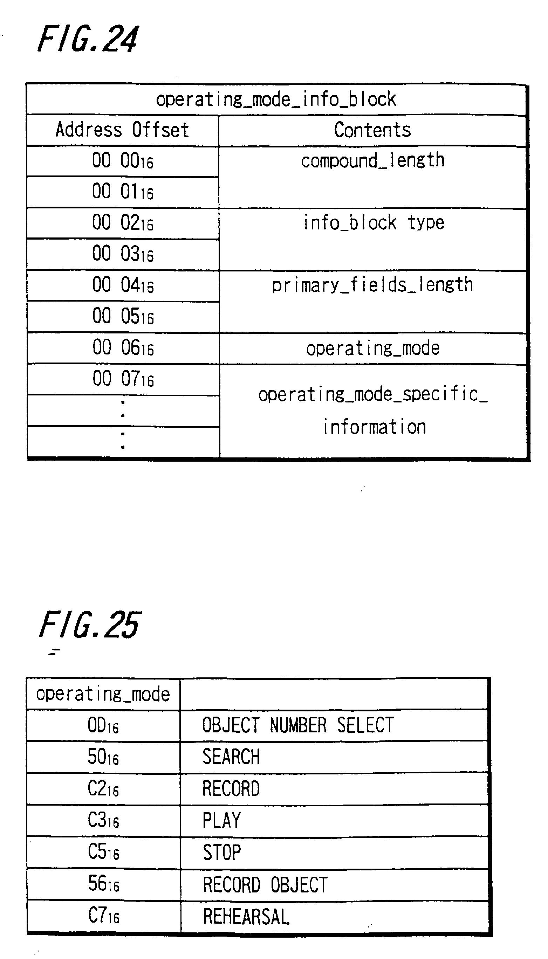

After the connect processing, the producer executes the processing for controlling the consumer operation. That is, in the packet of AV/C command, the data constitution of the operating mode info block has been specified as shown in Fig. 24 to control the disk recording/reproducing device, etc. Concretely speaking, data related to the data length, info block type, operating modes and information related to operating modes, are arranged, and modes shown in, for example, Fig. 25 are provided as the operating modes arranged in the address offset values 0006₁₆ (hexadecimal values).

If the operating modes shown in Fig. 25 are described in further detail, a value OD₁₆ is OBJECT NUMBER SELECT which is a mode instructing the reproduction of an object of a particular number recorded in the recording medium. The reproduction of the static picture, too, is instructed by this OBJECT NUMBER SELECT. A value 50₁₆ is SEARCH which is a mode instructing the search. A value C2₁₆ is RECORD which is a mode for instructing the reproduction. A value C5₁₆ is STOP which is a mode for instructing the stop. The instructions of search, record, reproduction and stop are for instructing the search, record, reproduction and stop for the main data recorded in the medium such as audio data.

A value 56₁₆ is RECORD OBJECT which is a mode for instructing the recording of an object. This mode instructs the recording of an object such as static picture or text data onto the medium. A value C7₁₆ is REHEARSAL which is a mode for instructing the rehearsal of operation for editing.

Reverting to the description of Fig. 23, when the connection processing ends at step S114 in this embodiment, a packet of an AV/C command designating RECORD OBJECT (see Fig. 25) of value 56₁₆ is sent as an operating mode from the producer to the consumer (step S115). Due to this instruction, the data of static picture are recorded into the disk 56. As a packet of response for this command, a response (see Fig. 20) of INTERIM representing the operation in compliance with the instruction is sent from the consumer to the producer (step S116).

When the record instruction processings end at steps S115 and S116, then, the size of data transmission is informed. That is, the data of CONTENT INFO is sent by a packet of control command of AV/C command from the producer to the consumer (step S117). The command of this CONTENT INFO is the one for informing the details related to the transmission data that are provided at that moment, and informs here the data related to the size of data that are to be transmitted. Upon receipt of data related to the size of data to be transmitted, the consumer sends to the producer a response ACCEPTED indicating that he has received the data (step S118).

Upon receipt of the data related to the size of the data, the disk recording/reproducing device 50 which is the consumer executes the processing for maintaining the region for receiving and processing the data, and makes ready for the reception of data.

After the data related to the size of data are transmitted, the IRD10 which is the producer transmits the provided data of static picture (received and stored as broadcast data) to the disk recording/reproducing device 50 which is the consumer (step S119). The processing for transmitting the data of static picture in the asynchronous transmission mode is the one for transmitting the data with a unit of segment as described earlier with reference to Fig. 1.

When the transmission of data of one unit (here, data of a piece of static picture) is completed, a disconnect processing is executed for resetting the connection between the producer and the consumer. That is, a DETACH control command is sent from the producer to the consumer (step S120). This command is the one for resetting the plug that is connected. A packet of response for the command is sent from the consumer to the producer (step S121). Thereafter, a packet of RELEASE control command is sent from the producer to the consumer (step S122). This command is the one indicating the completion of resetting of the plug. A packet of response for the command is sent from the consumer to the producer (step S123). Through the processing up to this point, the connection between the producer and the consumer is reset.

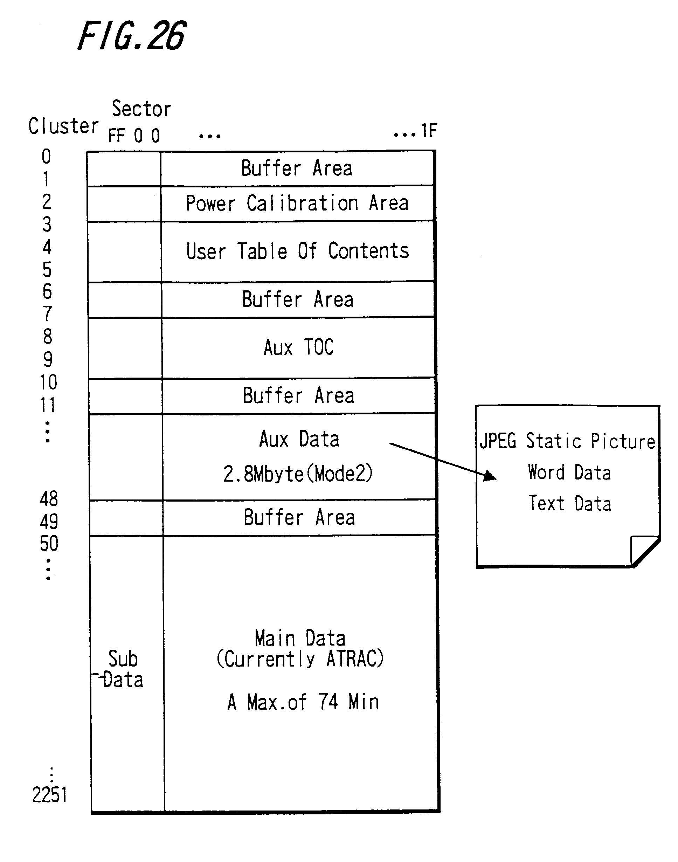

Fig. 26 illustrates a state where the data are recorded into the disk 56 by using the disk recording/reproducing device 50. The recording region of the disk 56 is divided into units called clusters; i.e., a predetermined number of clusters are provided for the area for controlling the pick-up power, area for index data, area for main data (audio data) and area for auxiliary data (Aux Data), and the data of a static picture are recorded as an object in the areas.

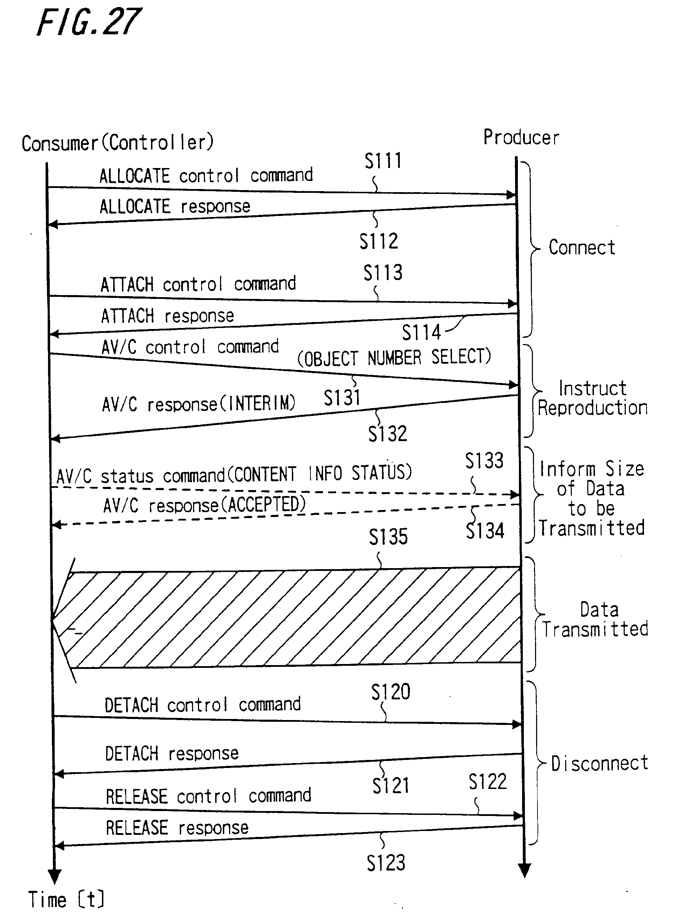

Next, a processing for instructing the reproduction of static picture data recorded in the disk will be described with reference to Fig. 27.

In this case, the disk recording/reproducing apparatus 50 is a source of transmitting data, which is a producer, and IRD10 is a destination that receives data, i.e., a consumer. The function of the controller is possessed by the IRD10 which is the consumer (constitution of Fig. 22C). First, a processing is executed for establishing a connection for asynchronous transmission between the producer and the consumer. That is, like in the example shown in Fig. 23, the ALLOCATE control command is sent from the consumer to the producer (step S111). This command is the one for instructing an address of a plug used for the transmission. A packet of response for the command is sent from the producer to the consumer (step S112). Thereafter, the packet of ATTACH control command is sent from the consumer to the producer (step S113). This command is the one representing the completion of plug setting. A packet of response for the command is sent from the producer to the consumer (step S114) to establish the connection between the producer and the consumer.

After the connection processing, a packet of OBJECT NUMBER SELECT of a value OD₁₆ is sent as an operating mode from the consumer to the producer (step S131). This mode is the one instructing the reproduction of an object of a particular number recorded in the recording medium (disk), and instructs the reproduction of static picture data recorded in the disk.

When the reproduction is instructed, a response (see Fig. 20) of INTERIM representing the acceptance of reproduction instruction is sent from the producer to the consumer (step S132). After the reproduction instruction processing, the size of the data to be transmitted is informed. Here, the data of CONTENT INFO STATUS are sent from the producer to the consumer using a packet of control command of AV/C command (step S133). The command of CONTENT INFO STATUS is the one for inquiring the details related to the prepared data that are transmitted, and asks the size of data to be transmitted. Upon receipt of this data, the producer sends a reply (data related to the size of the corresponding static picture data) for the data as a response to the consumer (step S134).

Upon receipt of the data related to the size of the data, the IRD10 which is the consumer executes the processing for maintaining a region for receiving and processing the data, to be ready for the reception of data.

After the transmission of data related to the size of data, the disk recording/reproducing device 50 which is the producer reproduces the static picture data recorded in the disk and transmits to the IRD10 which is the consumer (step S135). The processing for transmitting the static picture data in the asynchronous transfer mode is the one that transmits the data in a unit of segment as described above with reference to Fig. 1.

Upon the completion of transmission of a unit of data (here, data related to a piece of static picture), a disconnect processing is effected for resetting the connection between the producer and the consumer. That is, a DETACH control command is sent from the consumer to the producer (step S120). This command is the one for resetting the connected plug. A packet of response for the command is sent from the producer to the consumer (step S121). Thereafter, a packet of RELEASE control command is sent (step S122). This command is the one representing the completion of reset of the plug. A packet of response for the command is sent (step S123) to reset the connection between the producer and the consumer.

Thus, the size of data is informed in advance at the time of transmitting the static picture data or the like data in the asynchronous transfer mode and, hence, it is made possible to execute the processing for the size of data to be received by the equipment on the receiving side (consumer) prior to receiving the data and to suitably select a reception buffer region, eliminating error that occurs when the data of a size that cannot be accepted is received.

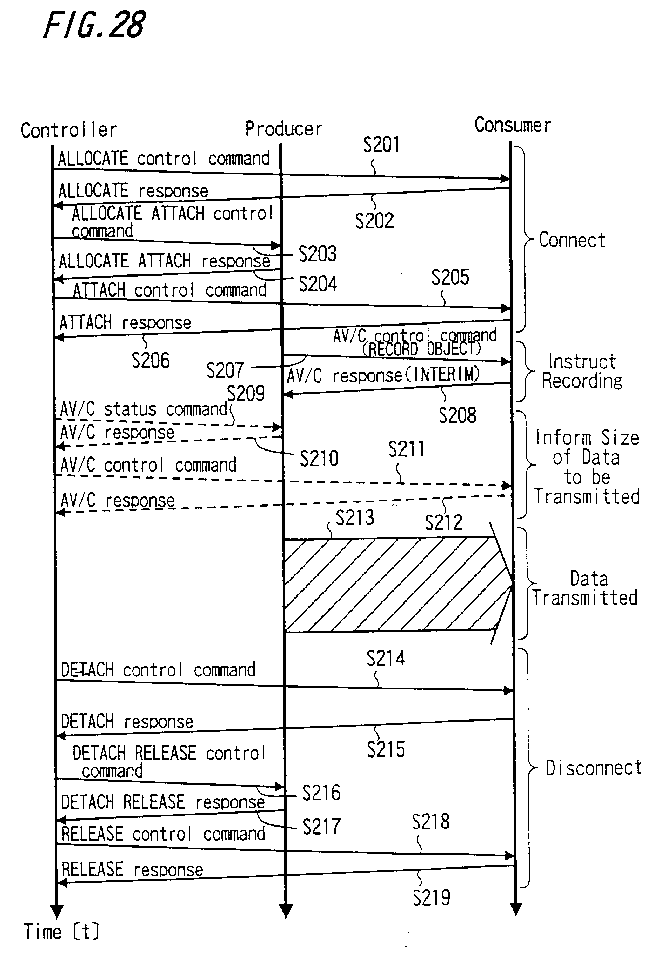

The processing described up to this point is the one that is executed when the function of the controller is incorporated in the equipment which works as the producer or the consumer. However, this processing can also be applied even to another equipment in which the controller is connected to the bus as shown in Fig. 22A. Fig. 28 illustrates a processing of this case.

The processing will now be described. First, a processing is executed being controlled by the controller for establishing a connection for asynchronous transmission between the producer and the consumer. That is, a packet of AV/C command is used, here, to send an ALLOCATE control command from the controller to the consumer (step S201). This command is the one for instructing the address of a plug used for the transmission. A packet of response for the command is sent from the consumer to the controller (step S202). Next, an ALLOCATE ATTACH control command is sent from the controller to the producer (step S203). This command is the one for instructing the address of a plug used for the transmission and for informing the address of a plug set to the consumer. A packet of response for the command is sent from the producer to the controller (step S204). Thereafter, a packet of ATTACH control command is sent from the controller to the consumer (step S205). This command is the one representing the completion of plug setting. A packet of response for the command is sent from the consumer to the controller (step S206). Through the processing up to this point, the connection is established between the producer and the consumer being controlled by the controller to maintain a transmission line for the asynchronous transmission of static picture data.

After the connection processing, the producer executes the processing for controlling the operation of the consumer. That is, a packet of AV/C command designating a RECORD OBJECT (see Fig. 25) of a value 56₁₆ is sent as an operating mode from the producer to the consumer (step S207). This instructs the recording of static picture data into the disk 56. As a packet of response for this command, the response (see Fig. 20) of INTERIM representing the operation according to the instruction, is sent from the consumer to the producer (step S208).

After the record instruction processings at steps S207 and S208, the size of data to be transmitted next is informed. That is, a STATUS command is sent from the controller to the producer (step S209) to ask the size of stationary picture data to be transmitted. Upon receipt of this command, the producer sends a response to which is added data related to the size of data to the controller (step S210). Upon receipt of this data, the controller sends a packet of control command to the consumer (step S211). To the packet has been added data related to the size of data. A packet of response for the command is sent from the consumer to the controller (step S212).

After the transmission of data related to the size of data, the IRD10 which is the producer transmits the static picture data that are provided to the disk recording/reproducing device 50 which is the consumer (step S213). After the completion of transmission of one unit of data (here, data of a piece of static picture), a disconnect processing is executed for resetting the connection between the producer and the consumer. That is, a DETACH control command is sent from the controller to the consumer (step S214). This command is the one for resetting the connected plug. A packet of response for the command is sent from the consumer to the controller (step S215). Further, a DETACH RELEASE control command is sent from the controller to the producer (step S216), and a packet of response for the command is sent from the producer to the controller (step S217). Thereafter, a packet of RELEASE control command is sent from the controller to the consumer (step S218), and a packet of response for the command is sent from the consumer to the controller (step S219). Through the processing up to this point, the connection between the producer and the consumer is reset.

Thus, when the controller is a separate equipment, the data related to the size of data is transmitted through the controller enabling the consumer to make sure the size of data.

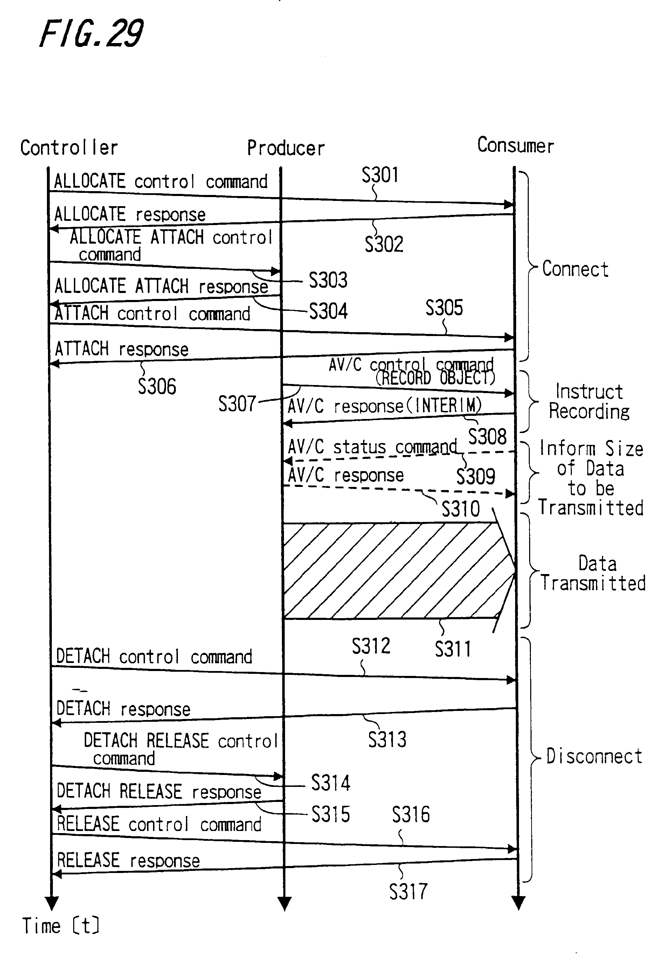

Even when the controller is a separate equipment, the data related to the data size may be directly exchanged between the producer and the consumer. Fig. 29 is a diagram illustrating an example of this case. First, a processing is executed for establishing a connection for asynchronous transmission between the producer and the consumer being controlled by the controller. Here, an ALLOCATE control command is sent from the controller to the consumer by using a packet of AV/C command (step S301). This command is the one for instructing the address of a plug used for the transmission. A packet of response for the command is sent from the consumer to the controller (step S302). Next, an ALLOCATE ATTACH control command is sent from the controller to the producer (step S303). This command is the one for instructing the address of a plug used for the transmission and for informing the address of a plug set to the consumer. A packet of response for the command is sent from the producer to the controller (step S304). Thereafter, a packet of ATTACH control command is sent from the controller to the consumer (step S305). This command is the one representing the completion of plug setting. A packet of response for the command is sent from the consumer to the controller (step S306). Through the processing up to this point, the connection is established between the producer and the consumer being controlled by the controller to maintain a transmission line for the asynchronous transmission for transmitting the static picture data.

After this connect processing, the producer executes the processing for controlling the operation of the consumer. That is, a packet of AV/C command designating a RECORD OBJECT (see Fig. 25) of the value 56₁₆ is sent as an operating mode from the producer to the consumer (step S307). This is to instruct the recording of data of static picture into the disk 56. As a packet of response for the command, a response (see Fig. 20) of INTERIM representing the operation according to the instruction, is sent from the consumer to the producer (step S308).

After the record instruction processings at steps S307 and S308, the size of data to be transmitted next is informed. Here, a STATUS command is directly sent from the consumer to the producer (step S309) to ask the size of static picture data to be transmitted. Upon receipt of this command, the producer sends a response to which is added the data related to the size of data to the consumer (step S310).

After the transmission of data related to the data size, the IRD10 which is the producer transmits the provided static picture data to the disk recording/reproducing device 50 which is the consumer (step S311). After the completion of transmission of a unit of data (here, data of a piece of static picture), a disconnect processing is executed to reset the connection between the producer and the consumer. That is, a DETACH control command is sent from the controller to the consumer (step S312). This command is the one for representing the connected plug. A packet of response for the command is sent from the consumer to the controller (step S312). Further, a DETACH RELEASE control command is sent from the controller to the producer (step S314), and a packet of response for the command is sent from the producer to the controller (step S315). Thereafter, a packet of RELEASE control command is sent from the controller to the consumer (step S316). A packet of response for the command is sent from the consumer to the controller (step S317). Through the processing up to this point, the connection between the producer and the consumer is reset.

Thus, even when the controller is a separate equipment, the data size can be confirmed by directly transmitting data between the producer and the consumer.

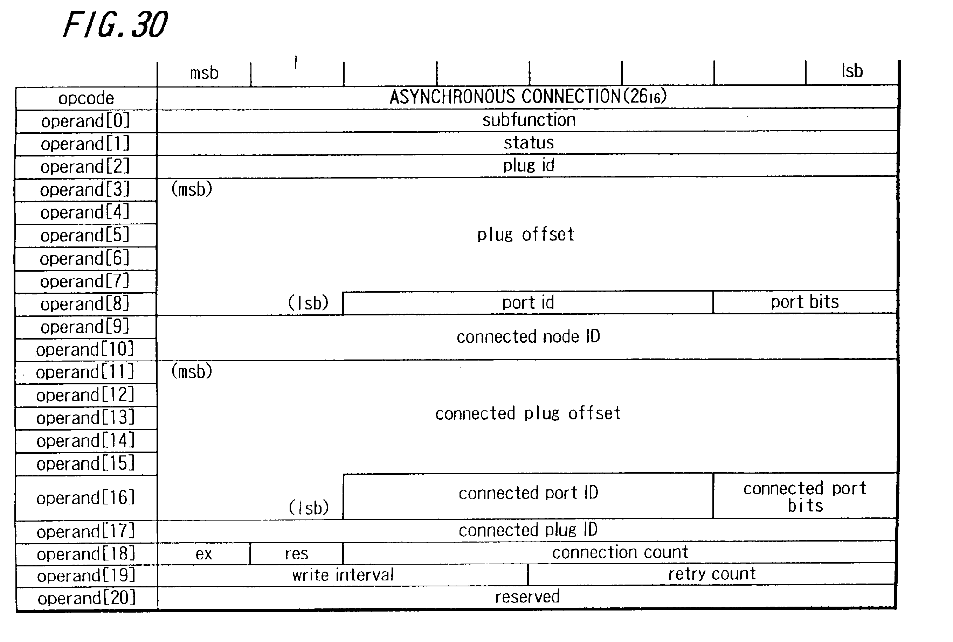

Described below are concrete examples of command response transmitted by the transmission examples shown in Figs. 23, 27, 28 and 29. Fig. 30 illustrates an AV/C packet used in the asynchronous connection. The [opcode] and [operand(0)] to [operand(20)] shown in Fig. 30 are transmitted being arranged in their corresponding sections of the packet shown in Fig. 19.

A value representing the asynchronous connection is set to [opcode].

As the data that follow [operand(0)], a function of during the control command is designated in the section of subfunction.

In the section of status, the state of port or an error code is returned back during the response.

In the section of plug ID, a unit plug which is the object of command is shown.

In the section of plug offset, an offset address value of asynchronous plug is shown during the response.

In the section of port ID, a port which is the object of command is shown.

In the section of port bits, a function supported by the port is shown during the response.

In the section of connected node ID, a node ID of equipment to which the connection is to be made is shown.

In the section of connected plug offset, the offset address of a plug to which the connection is made is shown.

In the section of connected port ID, a port to which the connection is made is shown.

In the section of connected port bits, a function supported by the port to which the connection is made is shown.

In the section of connected plug ID, a unit plug to which the connection is made is shown.

In the section of ex, an exclusive connection is designated. In a state where the exclusive connection is designated, acceptance is inhibited for the AV/C commands of asynchronous connection except the one issued by a controller that has established the connection.

In the section of connection count, the number of times (number of times of overlay) for which the connection is established, which is the object of command, is shown.

In the section of write interval, an interval for issuing write request at the time when the producer transmits a segment is shown.

In the section of retry count, a maximum number of times of retry of write request issued at the time when the producer transmits a segment, is shown.

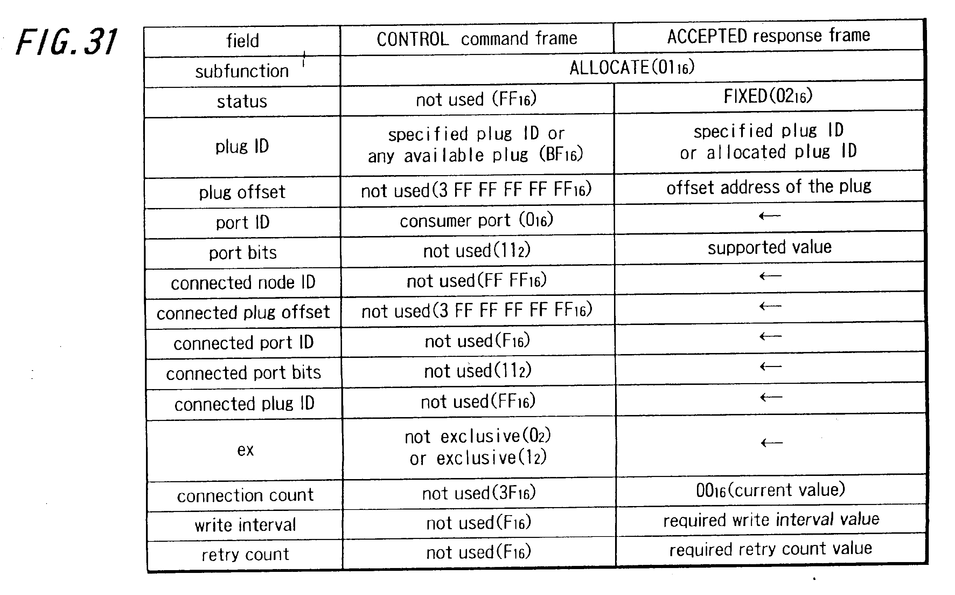

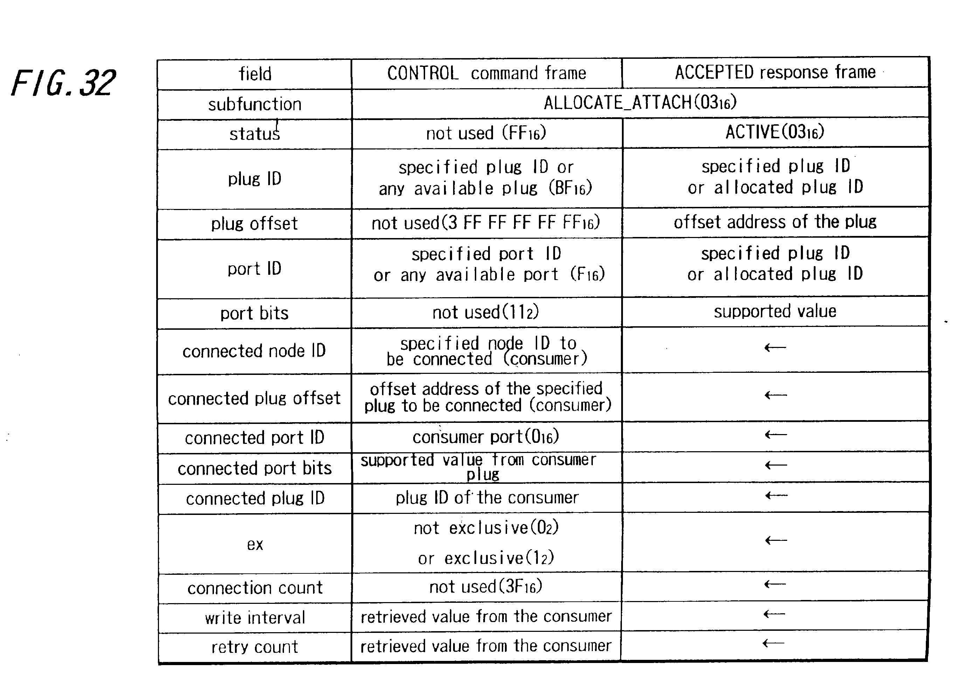

Next, described below are examples of data arranged among the sections of a packet used in the thus constituted asynchronous connection. Fig. 31 is a diagram illustrating the constitution of allocate command and response transmitted to the consumer at the time when the connection is established. In Fig. 31, the left side shows the constitution of command data and the right side shows the constitution of response data, the fields of response indicated by arrows representing that the command data are simply returned back. The same also holds even in the cases of Fig. 32 and subsequent figures. The allocate command shown in Fig. 31 is transmitted and a response thereto is obtained from the consumer, to temporarily reserve the consumer's plug/port used for the transmission and to obtain an offset address of the plug. The allocate command and response of such a data structure are transmitted at steps S111 and S112 of Fig. 23, at steps S111 and S112 of Fig. 27, at steps S201 and S202 of Fig. 28, and at steps S301 and S302 of Fig. 29.

Fig. 32 is a diagram illustrating the constitution of an allocate attach command transmitted to the producer at the time when the connection is established and a response thereto. Upon transmitting the allocate attach command shown in Fig. 32, plug/port of the producer used for the transmission are maintained to obtain an offset address of the plug. The allocate attach command and response of such a data structure are transmitted at steps S203 and S204 of Fig. 28, and at steps S304 and S305 of Fig. 29.

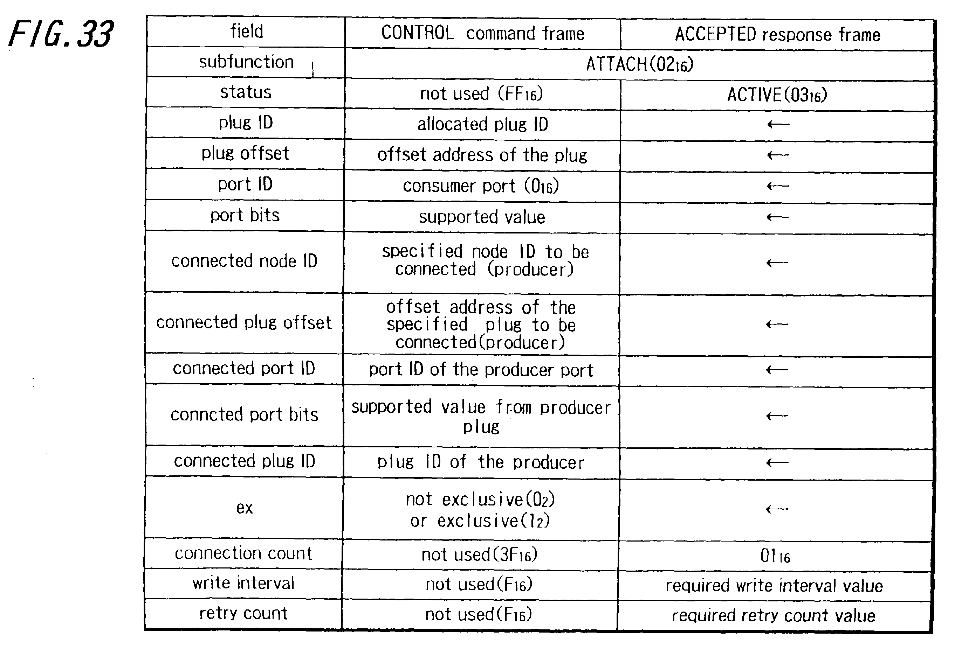

Fig. 33 is a diagram illustrating the constitution of an attach command transmitted to the consumer at the time when the connection is established and a response thereto. Upon transmitting the attach command shown in Fig. 33 and obtaining the response thereto from the consumer, plug/port of the consumer used for the transmission are maintained and the consumer is informed of the data of port of the producer to which the connection is to be made. The attach command and response of such a data structure are transmitted at steps S113 and S114 of Fig. 23, at steps S113 and S114 of Fig. 27, at steps S205 and S206 of Fig. 28, and at steps S305 and S306 of Fig. 29.

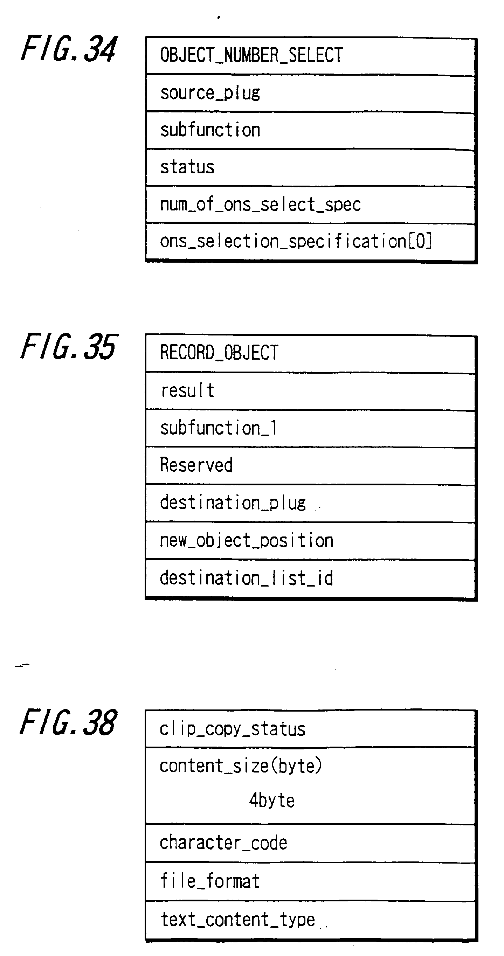

After the connection processing is completed by the command and response of up to this point, the data shown in Fig. 34 are arranged in [opcode] and [operand] in the control command of object number select that instructs the reproduction. That is, there are arranged a value indicating the object number select, a source plug, a subfunction, a status, data for selecting the object number, and data specific to the object number to be selected. A control command of object number select of such a data structure is transmitted at step S131 of Fig. 27.

The data shown in Fig. 35 are arranged in [opcode] and [operand] in the control command of record object for instructing the recording. That is, there are arranged a value indicating the record object, a result, a sub-function, a destination plug, an object position, and a destination list ID. A control command of object number select of such a data structure is transmitted at step S225 of Fig. 23, at step S207 of Fig. 28 and at step S307 of Fig. 29.

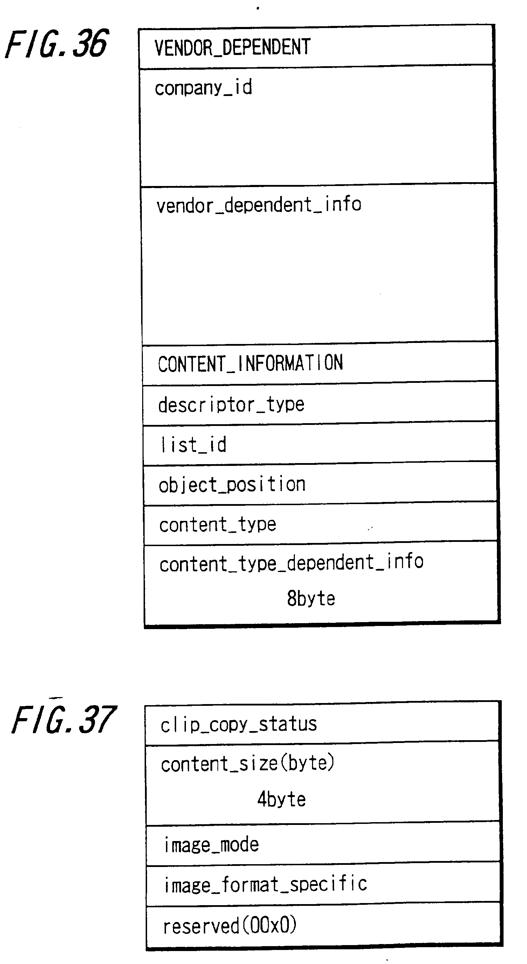

The data shown in Fig. 36 are arranged in [opcode] and [operand] in the status command of connect information that notifies the data size. Here,the data are specified as data structure of vendor dependent (specific to the manufacturer of equipment), and there are arranged a value indicating vendor dependent, a company ID, information related to vendor dependent, connect information, a descriptor type, a list ID, an object position, a content type, and information specific to the content type.

Information specific to the content type is the data structure shown in Fig. 37 when the content type is video data (static picture data) of the JPEG system. Here, a copy limit of content represented by the clip copy status, and the size of video data to be transmitted is represented by the content size. Due to this data, the remote side is informed of the size of data to be transmitted. There are further arranged an image mode and data related to the image format.

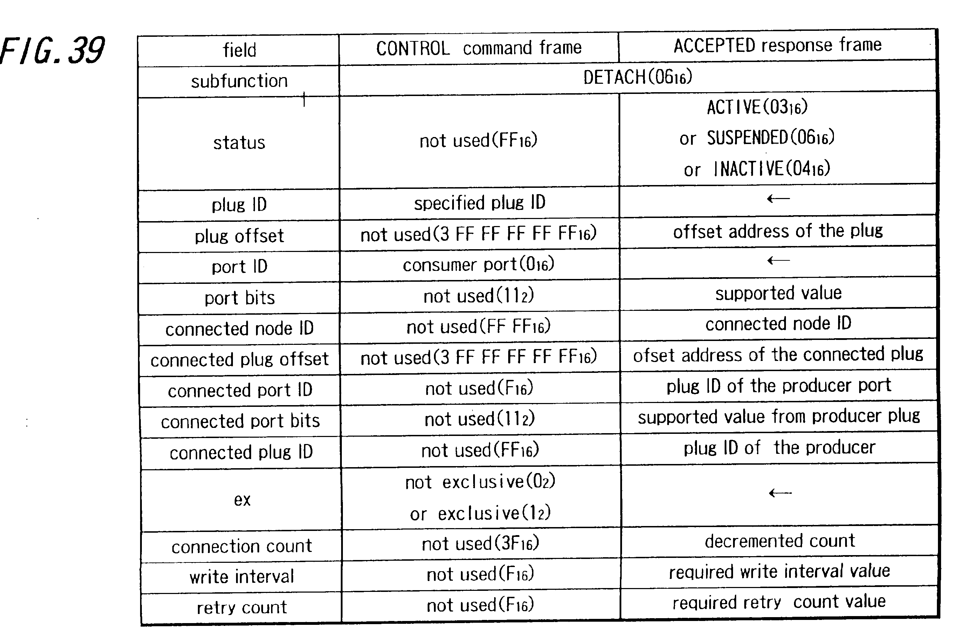

Fig. 38 illustrates another example of information specific to the content type. This example deals with the case where the content type is text data. Here, a copy limit of content is represented by the clip copy status, and the size of the text data to be transmitted is represented by the content size. Due to this data, the remote side is informed of the size of data to be transmitted. There are arranged a character code, a file format and data related to the text content type.

Next, described below are examples of data transmitted at the time of disconnect for resetting the connection. Fig. 39 is a diagram illustrating the constitution of a detach command transmitted to the consumer at the time of resetting the connection and a response thereto. The detach command shown in Fig. 39 is transmitted and a response thereto is obtained from the consumer to halt the operation of plug/port of the designated consumer. The detach command of such a data structure and response are transmitted at steps S120 and S121 of Figs. 23, at steps S120 and S121 of Fig. 27, at steps S214 and S215 of Fig. 28, and at steps S312 and S313 of Fig. 29.

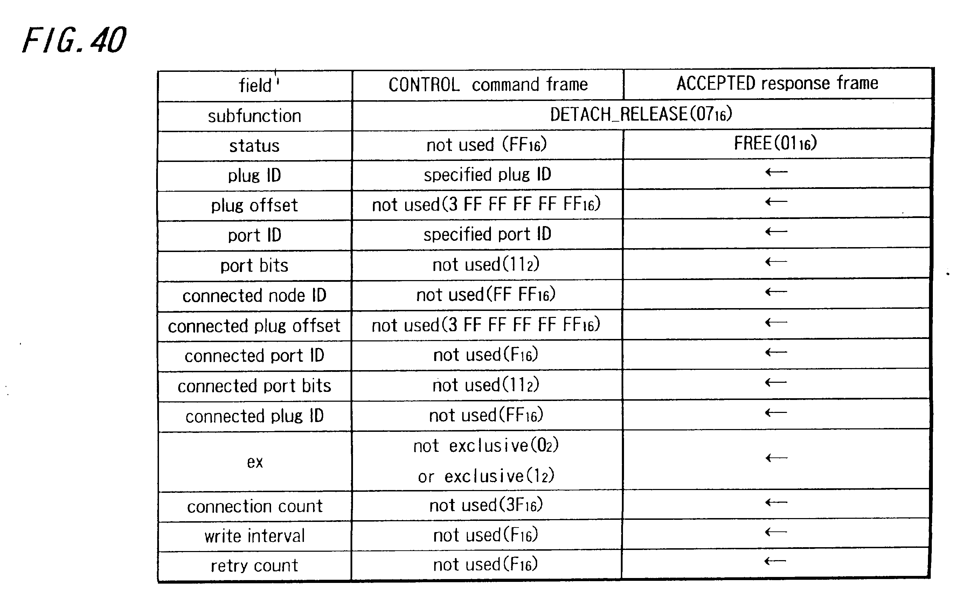

Fig. 40 is a diagram illustrating the constitution of a detach release command transmitted to the producer at the time of resetting the connection and a response thereto. The detach release command shown in Fig. 40 is transmitted to halt the operation of plug/port of the designated producer thereby to disconnect. The detach release command of such a data structure and response are transmitted at steps S216 and S217 of Fig. 28, and at steps S314 and S315 of Fig. 29.

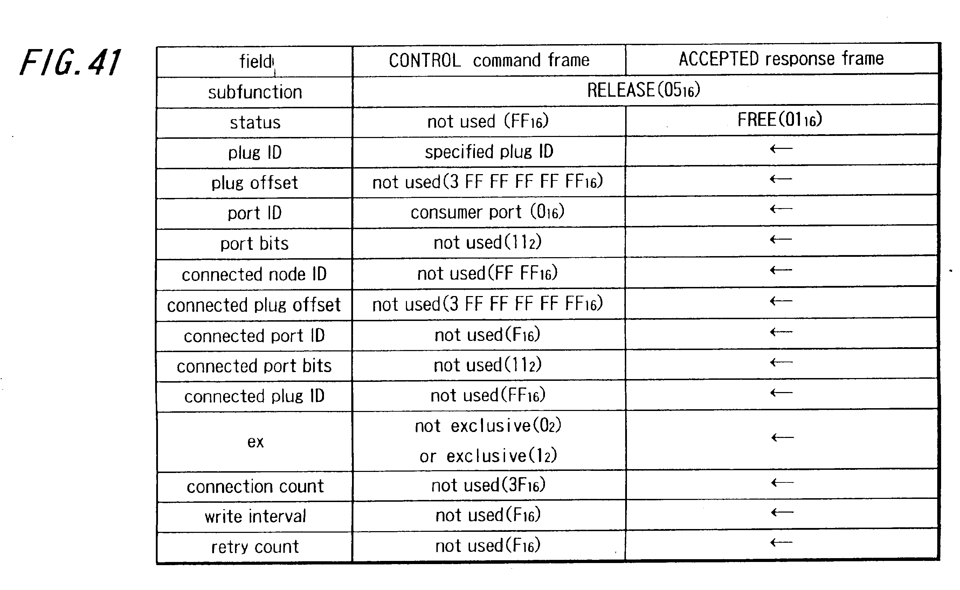

Fig. 41 is a diagram illustrating the constitution of a release command transmitted to the consumer at the time of resetting the connection and a response thereto. The release command shown in Fig. 41 is transmitted and a response thereto is obtained from the consumer to disconnect plug/port of the designated consumer. The release command of such a data structure and response are transmitted at steps S122 and S123 of Fig. 23, at steps S122 and S123 of Fig. 27, at steps S218 and S219 of Fig. 28, and at steps S316 and S317 of Fig. 29.

In the embodiments described thus far, the size of data is confirmed when the static picture data are to be transmitted. At the time of transmitting other data such as text data, the data related to the data size may similarly be transmitted and confirmed. In the case of the static picture data as described already, the data structure at the time of informing the data size is as shown in Fig. 37. In the case of the text data, on the other hand, the data structure at the time of informing the data size becomes as shown in Fig 38.

In the above-mentioned embodiments, the status command for informing the data size is set as a data structure specific to the manufacturer. However, a command common to the manufacturers may be defined.

In the above-mentioned embodiments, further, the data size is confirmed when the data are to be transmitted in the isochronous transfer mode. Even when the data are to be transmitted in the asynchronous transfer mode, the data of the data size may be transmitted after the connection is established before the start of data transmission when the size of data has been determined in advance.

Further, the above-mentioned embodiments have dealt with the case of the network constituted by the bus of the IEEE 1394 system. The invention, however, can be applied even to the case of transmitting the data among equipment of other network constitution.

In the above-mentioned embodiments, further, the individual equipment are furnished with functions for executing the above-mentioned processings. However, a program that executes the similar processing may be sent to the user by using some provider medium. Then, the user may mount the program stored in the medium on a computer to execute the same functions. In this case, the provider medium may be a physical recording medium such as optical disk or magnetic disk, or a medium that provides data to the user through communication means such as internet.

As described above, according to the transmission method of the first embodiment described in claim 1, equipment on the receiving side connected to the network is allowed to confirm the size of data to be transmitted prior to starting the transmission of data and, hence, to set, in advance, a processing adapted to the data size in order to execute the proper processing adapted to the size of data that are transmitted.

According to the transmission method of the second embodiment described in claim 2 which is related to the invention of claim 1, a processing is executed for maintaining a region for at least temporarily storing the data to be transmitted. That is, there may be maintained only a region for storing the data of the data size. There is no need of maintaining a region of a size which is unnecessarily large in setting the region for storing the received data.

According to the transmission method of the third embodiment described in claim 3 which is related to the invention of claim 1, the data are transmitted in an asynchronous transfer mode to favorably inform the size and to favorably transmit the data.

According to the transmission method of the fourth embodiment described in claim 4 which is related to the invention of claim 1, a step for establishing the connection is executed by equipment that sends the data thereby to establish the connection and to inform the data size in a series of control operation.

According to the transmission method of the fifth embodiment described in claim 5 which is related to the invention of claim 1, a step for establishing the connection is executed by another control equipment so that the data-receiving side can confirm the data size while establishing the connection by the another control equipment.

According to the transmission method of the sixth embodiment described in claim 6 which is related to the invention of claim 5, even the data related to the data size are transmitted to the equipment on the receiving side through control equipment. Therefore, the data related to the data size are favorably transmitted being controlled by the control equipment.

According to the transmission method of the seventh embodiment described in claim 7 which is related to the invention of claim 1, a step of transmitting the data size is executed upon a request from the equipment on the receiving side. Therefore, the equipment on the receiving side receives the data when it needs the data size.

According to the transmission method of the eighth embodiment described in claim 8 which is related to the invention of claim 1, the connection is disconnected after the transmission of data. Therefore, the circuit is not left connected after the transfer of data, and other equipment in the network are allowed to efficiently utilize the transmission band.

According to an electronic equipment of the ninth embodiment described in claim 9, it is made possible to confirm the size of data to be transmitted prior to starting the transmission of data and, hence, to set, in advance, a processing suited for the size of data to be transmitted.

According to the electronic equipment of the tenth embodiment described in claim 10 which is related to the invention of claim 9, the size of data is confirmed by controlling means through a direct communication with equipment that sends the data. Therefore, the size of data can be confirmed through a small amount of processing without passing through other equipment.

According to the electronic equipment of the eleventh embodiment described in claim 11 which is related to the invention of claim 9, provision is made of storage region maintaining means for maintaining a region for at least temporarily storing the data to be transmitted based upon the data related to the size of data. Therefore, the storage region maintaining means needs maintain only a region for storing the data of the data size that is detected. There is no need of maintaining a region of a size which is unnecessarily large, and the processing is efficiently executed for maintaining the storage region.

According to the electronic equipment of the twelfth embodiment described in claim 12 which is related to the invention of claim 11, provision is further made of recording medium means for recording the data, and recording means for recording, in the recording medium means, the data stored in the region that is maintained by the storage region maintaining meas. Thus, the received data that are temporarily stored are, then, efficiently recorded in the recording medium.

According to the electronic equipment of the thriteenth embodiment described in claim 13 which is related to the invention of claim 9, the data related to the detected data size are transmitted to other equipment. Therefore, other equipment on the network is allowed to detect the data size being controlled by the equipment.

According to the electronic equipment of the fourteenth embodiment described in claim 14 which is related to the invention of claim 13, the data are transmitted in an asynchronous transfer mode. Therefore, the data related to the size of the data can be efficiently transmitted in the asynchronous transfer mode.

A program provided by a provider medium of the fifteenth embodiment described in claim 15 is executed enabling equipment on the receiving side connected to the network to confirm the size of data to be transmitted prior to starting the transmission of data and, hence, to set, in advance, a processing adapted to the size of data to be transmitted, making it possible to execute the proper processing adapted to the size of data that are transmitted.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A transmission method of transmitting data among equipment connected to a predetermined network, comprising:
a step of establishing a connection for transmitting the data between a first equipment and a second equipment connected to the network;
a step of transmitting data size from the first equipment to the second equipment, the data being related to the size of data to be transmitted from the first equipment; and
a step of transmitting data from the first equipment to the second equipment after the step of transmitting the data size.

2. A transmission method according to claim 1, further comprising a step for maintaining a region for at least temporarily storing the data transmitted in the step of transmitting the data, based on the data related to the data size.

3. A transmission method according to claim 1, wherein said step of transmitting data transmits the data in an asynchronous transfer mode.

4. A transmission method according to claim 1, wherein in said step of establishing the connection, said first equipment connected to said network establishes the connection.

5. A transmission method according to claim 1, wherein in said step of establishing the connection, a third equipment connected to said network establishes the connection.

6. A transmission method according to claim 5, wherein the data related to the size of data are transmitted from said first equipment to said third equipment, and are then transmitted from said third equipment to said second equipment.

7. A transmission method according to claim 1, wherein the step of transmitting the data size starts working in response to a request from said second equipment to said first equipment.

8. A transmission method according to claim 1, further comprising a step of disconnecting the connection established between said first equipment and said second equipment after the step of transmitting the data.

9. An electronic equipment connected to a predetermined network, comprising:
input/output means for exchanging data relative to other equipment upon establishing the connection to the other equipment connected to the network; and
control means for detecting the size of data transmitted to said other equipment.

10. An electronic equipment according to claim 9, wherein the size of data is detected by said control means through the communication with said other equipment that sends the data.

11. An electronic equipment according to claim 9, further comprising means for maintaining a region for at least temporarily storing the data based upon the detected data size.

12. An electronic equipment according to claim 11, further comprising:
recording medium means for recording the data; and
recording means for recording, into said recording medium means, the data stored in said region.

13. An electronic equipment according to claim 9, further comprising means for transmitting the data related to the size of data detected by said control means to said other equipment.

14. An electronic equipment according to claim 13, wherein said data transmission means transmits the data in an asynchronous transfer mode.

15. A provider medium for providing a program for controlling the communication among equipment connected to a predetermined network, the program executing:
a processing for establishing a connection between a plug of a first equipment and a plug of a second equipment in executing the communication between said first equipment and said second equipment connected to said network; and
a processing for transmitting data from said first equipment to said second equipment, the data being related to the size of data to be transmitted from said first equipment.
